# EUROPÄISCHE PATENTSCHRIFT

(11) **EP 0 643 233 B1**
(45) Veröffentlichungstag und Bekanntmachung des Hinweises auf die Patenterteilung: **04.11.1998**
(21) Anmeldenummer: 94114231.7
(22) Anmeldetag: 09.09.1994
(51) Int. Cl.: F16C 29/06

(54) **Linearführungseinrichtung**
Linear guide device
Dispositif de guidage linéaire

(30) Priorität: 10.09.1993 DE 4330772
(43) Veröffentlichungstag der Anmeldung: 15.03.1995
(73) Patentinhaber: Deutsche Star GmbH, 97424 Schweinfurt (DE)
(72) Erfinder: Keller, Werner, D-97535 Wasserlosen (DE); Dütsch, German, D-97424 Schweinfurt (DE); Hartmann, Roland, D-97508 Grettstadt-Dürrfeld (DE)
(74) Vertreter: Weickmann, Heinrich, Dipl.-Ing.

(56) Entgegenhaltungen:
- EP-A- 0 120 093
- EP-A- 0 211 243
- WO-A-93/12351
- JP-A- 3 121 310
- US-A- 4 921 358

## Beschreibung

Die Erfindung betrifft eine Linearführungseinrichtung, umfassend eine Führungsschiene mit einer Längsachse und einen auf dieser Führungsschiene längs dieser Längsachse durch Wälzkörperumläufe geführten Lagerhauptkörper,
wobei an dem Lagerhauptkörper an mindestens einer Endfläche desselben eine Endplatte mit einer der Endfläche des Lagerhauptkörpers zugekehrten Anlagefläche anliegt,
wobei weiter in der Anlagefläche der Endplatte für mindestens einen Wälzkörperumlauf eine Umlenkrinne versenkt angeordnet ist, welche für einen Umlenkbogenabschnitt des Wälzkörperumlaufs eine äußere Umlenkfläche bildet,
wobei weiter in der Anlagefläche eine die Umlenkrinne kreuzende Umlenkstückaufnahmerinne zur Aufnahme eines die Umlenkrinne kreuzenden Umlenkstücks versenkt ausgebildet ist,
wobei weiter das Umlenkstück mit einer endflächennahen Brustfläche der Endfläche des Lagerhauptkörpers zugekehrt ist und dieses Umlenkstück außerdem eine der äußeren Umlenkfläche gegenüberliegende konvexe Rückenfläche aufweist, welche Rückenfläche eine der äußeren Umlenkfläche gegenüberliegende innere Umlenkfläche für den Umlenkbogenabschnitt bildet,
wobei weiter in der Endplatte mindestens ein Teil eines Schmiermittelversorgungssystems für den mindestens einen Wälzkörperumlauf untergebracht ist,
wobei weiter ein wälzkörpernaher Teil des Schmiermittelversorgungssystems innerhalb der Umlenkstückaufnahmerinne verläuft und im Bereich der inneren Umlenkfläche des Umlenkstücks zu den Wälzkörpern des Wälzkörperumlaufs hin offen ist.

Eine solche Linearführungseinheit ist aus der EP-B1-0 211 243 und aus der korrespondierenden US-PS 4 743 124 bekannt.

Bei der bekannten Ausführungsform ist das Schmiermittelversorgungssystem auf einem großen Teil seiner Länge von einer reliefartig in der Anlagefläche der Endplatte versenkt verlaufenden Schmiermittelkanalrinne gebildet, welche durch die Anlage an der Endfläche des Lagerhauptkörpers abgedeckt ist und an ihren Enden an je eine Umlenkstückaufnahmerinne anschließt.

Innerhalb der beiden Umlenkstückaufnahmerinnen ist dann jeweils ein Umlenkstück aufgenommen. Durch das Umlenkstück und die jeweils zugehörige Umlenkstückaufnahmerinne sind dann wälzkörpernahe Endverteilungsbereiche des Schmiermittelversorgungssystems ausgebildet. Die Schmiermittelverteilung beruht also dort auf dem Prinzip, in der Anlagefläche der jeweiligen Endplatte ein zur Anlagefläche hin durchwegs offenes Rinnensystem zu schaffen, welches dann im Bereich der Umlenkbogenabschnitte der Wälzkörperumläufe durch die diesen zugehörigen Umlenkstücke komplettiert wird.

Aus der EP-A1-0 120 093 ist eine Linearführungseinrichtung ebenfalls mit Endplatten an den Endflächen des Lagerhauptkörpers bekannt. Bei dieser Ausführungsform ist in den Endplatten auch jeweils mindestens ein Teil eines Schmiermittelversorgungssystems für die Schmiermittelversorgung der Umlenkbogenabschnitte der Wälzkörperreihen vorgesehen. Ein den wesentlichen Teil der Länge des Schmiermittelversorgungssystems der jeweiligen Endplatte bildender Schmiermittelkanal ist dabei durch eine sandwich-artige Überlagerung einer Zwischenplatte und einer Abdeckplatte gebildet, die zusammen die Endplatte bilden. Der Schmiermittelkanal ist durch eine Nut der Zwischenplatte in seinem Querschnitt bestimmt und durch die Abdeckplatte vervollständigt.

Aus der JP-A-3 121 310 ist eine Linearführungseinheit mit Endplatten an Endflächen eines Lagerhauptkörpers bekannt, bei der die die äußeren Umlenkflächen bildenden Umlenkrinnen mit Schmiermittel versorgt werden. Die Schmiermittelversorgung verläuft in einer von der Anlagefläche beabstandeten Ebene und weist einen parallel zur Anlagefläche verlaufenden Schmiermittelkanal auf, der durch das Material der Endplatte einstückig ringsum begrenzt ist.

Der Erfindung liegt die Aufgabe zugrunde, bei einer Linearführungseinrichtung der eingangs bezeichneten Art ein Schmiermittelversorgungssystem im Bereich der mindestens einen Endplatte zu schaffen, welches bei einfachem Aufbau verbesserte Abdichteigenschaften für das Schmiermittel, insbesondere im Falle des Einsatzes von niedrig-viskosen und flüssigen Schmiermitteln, ermöglicht.

Zur Lösung dieser Aufgabe wird erfindungsgemäß vorgeschlagen, daß das Schmiermittelversorgungssystem einen innerhalb der Endplatte im wesentlichen parallel zu der Anlagefläche verlaufenden Schmiermittelkanal umfaßt, welcher in einem Kanalquerschnitt durch das Material der Endplatte einstückig ringsum begrenzt ist und in einem Annäherungsbereich zu der Umlenkstückaufnahmerinne mit dem in der Umlenkstückaufnahmerinne untergebrachten Teil des Schmiermittelversorgungssystems verbunden ist.

Insbesondere kann der Schmiermittelkanal innerhalb des Materials der Endplatte beim Herstellen der Endplatte durch Spritzen oder Gießen mittels eines entsprechenden kanalbildenden Kerns hergestellt sein, so daß der Kanalquerschnitt durch das Material der Endplatte einstückig begrenzt ist.

Die erfindungsgemäße Ausbildung des Schmiermittelkanals erscheint auf den ersten Blick aufgrund komplizierterer Herstellungs- und Gießvorgänge aufwendiger zu sein, als die bekannten Lösungen nach den bekannten, oben diskutierten Patentschriften. Darüber hinaus erscheint die erfindungsgemäße Lösung insofern inkonsequent zu sein, als das Schmiermittelversorgungssystem teilweise innerhalb der Endplatte eingeschlossen ist, teilweise jedoch - nämlich im Bereich der Umlenkstückaufnahmerinnen - zu der Anlagefläche der Endplatte hin freiliegt.

Es hat sich aber gezeigt, daß die erfindungsgemäße Ausbildung des Schmiermittelversorgungssystems erhebliche Vorteile bietet: Es bestehen erhebliche Schwierigkeiten, ein innerhalb der Endplatte untergebrachtes Schmiermittelversorgungssystem zufriedenstellend abzudichten. Dabei ist zu bedenken, daß zum einen die Schmiermittelnachfüllung unter erheblichem Druck zu erfolgen hat, um eine perfekte Versorgung aller zu schmierenden Bereiche zu gewährleisten. Bei der Verteilung des Schmiermittels über ausgedehnte Flächen und Linearwege des Schmiermittelversorgungssystems ergeben sich dann, wenn die Kanalwege durch sandwich-artig aneinander anliegende Flächenteile begrenzt sind, aufgrund der Schmiermitteldrücke erhebliche Kräfte, welche die Endplatte im Anlagebereich seiner Anlagefläche mit der Endfläche des Lagerhauptkörpers von diesem abzuheben versuchen. Andererseits muß man die Endplatten, da sie ja Führungsfunktion für die Wälzkörper, z.B. Wälzkugeln, besitzen müssen, aus einem verhältnismäßig harten Kunststoff herstellen, so daß im Anlagebereich der Anlagefläche der Endplatte einerseits und der Endfläche des Lagerhauptkörpers andererseits Undichtigkeiten aufgrund von Mikrounebenheiten entstehen können, die auch durch Anspannen der Endplatten gegen den Lagerhauptkörper mit vergleichsweise großen Spannkräften nicht immer vollständig ausgeschlossen werden können, insbesondere wenn mit niedrig-viskosen bis flüssigen Schmiermitteln gerechnet werden muß. Die Endplatten können auch nicht mit beliebig großen Spannkräften an den Endflächen der Lagerhauptkörper angespannt werden, da solche Spannkräfte zur Verformung der Endplatten führen können, welche die Führungseigenschaften der in den Endplatten ausgebildeten Umlenkrinnen für die Umlenkbogenabschnitte der Wälzkörperreihen infolge elastischer Verformung der Endplatten beeinträchtigen können. Weiterhin ist es auch nicht ohne weiteres möglich, zwischen die Endflächen der Lagerhauptkörper und die Anlageflächen der Endplatten Dichtungsmatten einzulegen, wie an sie etwa zwischen die Kopffläche einer Brennkraftmaschine und den Zylinderkopf einlegt, weil beim Anspannen der Endplatten gegen die jeweilige Endfläche des Lagerhauptkörpers dadurch Ungenauigkeiten in der Gesamtlängserstreckung der Wälzkörperumläufe auftreten können, die den reibungslosen Umlauf der Wälzkörper in den Wälzkörperumläufen beeinträchtigen können.

Bei der erfindungsgemäßen Ausgestaltung der Linearführungseinrichtung im allgemeinen und der Endplatten im speziellen reduziert sich der Bereich, in dem Schmiermitteldruck und Abdichtprobleme zwischen den aneinander anliegenden Flächen der Endplatten und des Lagerhauptkörpers auf einen verhältnismäßig geringen Umgebungsbereich der Umlenkstücke. Deshalb ist es möglich, durch geschickte Verteilung von Spannbolzen oder dergl. in diesem Bereich eine hinreichende Abdichtung zu erzielen. In den sehr viel längeren Zuführungsbereichen für das Schmiermittel dagegen ist das Abdichtproblem dadurch völlig ausgeschaltet, daß die Schmiermittelkanäle dort vollständig gekapselt innerhalb der Endplatten verlaufen. Hier stellt auch das Anpressen der Endplatten an die Endflächen des Lagerhauptkörpers kein Problem mehr dar.

Aus herstellungstechnischen Gründen wird empfohlen, daß die Umlenkstückaufnahmerinne einen in ihrer Längsrichtung von einer Kreuzungsstelle mit der jeweiligen Umlenkrinne beabstandeten Endabschnitt aufweist, welcher in einem Annäherungsbereich zu dem Schmiermittelkanal liegt, und daß dort eine Verbindung zwischen dem Schmiermittelkanal und dem innerhalb der Umlenkstückaufnahmerinne liegenden Teil des Schmiermittelversorgungssystems angeordnet ist. Auf diese Weise verkürzt sich diese Verbindung auf ein Minimum, was herstellungstechnisch insbesondere beim Spritzen oder Gießen der Endplatten von großem Vorteil ist.

Entsprechend dem in der Regel und erwünschtermaßen relativ flachen, scheibenförmigen Aufbau der Endplatten wird vorgeschlagen, daß der Schmiermittelkanal im wesentlichen parallel zu der Anlagefläche der jeweiligen Endplatte verläuft und die Umlenkstückaufnahmerinne in einem an die Rückenfläche des Umlenkstücks angrenzenden Rinnenbodenbereich kreuzt oder anschneidet, wobei im Bereich dieser Kreuzung bzw. Anschneidung eine Verbindung zwischen dem Schmiermittelkanal und dem innerhalb der Umlenkstückaufnahmerinne liegenden Teil des Schmiermittelversorgungssystems hergestellt werden kann. Auch dies ist herstellungstechnisch günstig und erleichtert und verbilligt die Herstellung der zum Spritzen oder Gießen der Endplatten notwendigen Formen.

Es ist, wie auch schon in der EP-B1-0 211 243 dargestellt, möglich, den innerhalb der Umlenkstückaufnahmerinne liegenden Teil des Schmiermittelversorgungssystems mit einer Brustflächennut zu versehen, welche in Längsrichtung des Umlenkstücks in dessen Brustfläche verläuft und durch die Endfläche des Lagerhauptkörpers abgedeckt ist. Der Schmiermittelabfluß wird weiter dadurch reduziert, daß einem etwaigen Schmiermittelleckverlust nicht nur durch die Anlage zwischen Endplattenanlagefläche und Hauptkörperendfläche begegnet wird, sondern überdies durch die Anlage zwischen der Rückenfläche des jeweiligen Umlenkstücks und der Rinnenbodenfläche der Umlenkstückaufnahmerinne. Die Brustflächennut kann dabei mit dem Schmiermittelkanal durch einen umlenkstückseitigen primären Querkanal verbunden sein, welcher das Umlenkstück im wesentlichen orthogonal zur Brustfläche durchsetzt. Auch dies ist formtechnisch im Hinblick auf die Herstellung des Umlenkstücks günstig und führt gleichzeitig zu einer günstigen Ausgestaltung der Endplatte, indem dieser umlenkstückseitige primäre Querkanal an einen endplattenseitigen Querkanal angeschlossen werden kann, welcher ebenfalls orthogonal zu der Anlagefläche der Endplatte verläuft und mit dem Schmiermittelkanal in Verbindung steht.

An ihrem im Schmiermittelfluß den Wälzkörpern zugekehrten Ende kann die Brustflächennut weiterhin durch einen umlenkstückseitigen sekundären Querkanal mit einem Schmiermittelausmündungssystem im Bereich der Rückenfläche des Umlenkstücks verbunden sein. Auch dies ist herstellungstechnisch günstig, weil damit im wesentlichen nur die Ausformung des an und für sich verhältnismäßig einfach gestalteten Umlenkstücks in Mitleidenschaft gezogen wird.

Bei vielen Ausführungsformen, insbesondere bei solchen, bei denen auf einer Führungsschiene ein U-förmiger Lagerhauptkörper angeordnet ist und die Wälzkörperumläufe jeweils zwischen einem Schenkel des U-förmigen Lagerhauptkörpers und einer Seitenfläche der Führungsschiene angeordnet sind, ist es üblich, zwischen der Führungsschiene und dem jeweiligen Schenkel des Lagerhauptkörpers zwei oder auch drei Wälzkörperumläufe vorzusehen. Dann benötigt man grundsätzlich für den Umlenkbogenabschnitt jedes Wälzkörperumlaufs ein Umlenkstück. Man kann ein und dasselbe Umlenkstück den Umlenkbogenabschnitten zweier oder dreier oder auch mehrerer Wälzkörperumläufe zuordnen, wenn diese annähernd oder exakt gleiche Krümmungsachsen besitzen. Ordnet man zwei oder mehreren Umlenkbogenabschnitten von verschiedenen Wälzkörperumläufen ein gemeinsames Umlenkstück zu, so kann an den umlenkstückseitigen, sekundären Querkanal so anordnen, daß er das Umlenkstück an einer Stelle zwischen respektiven Kreuzungsstellen des Umlenkstücks mit den verschiedenen Umlenkbogenabschnitten durchsetzt, also beispielsweise zwischen zwei Umlenkbogenabschnitten. Um dann nicht mehrere Durchgänge durch das Umlenkstück vorsehen zu müssen, kann man den umlenkstückseitigen sekundären Querkanal mit einer in der konvexen Rückenfläche des Umlenkstücks angeordneten, im wesentlichen parallel zu dessen Längserstreckung verlaufenden Mündungsrinne verbinden, welche durch eine Rinnenbegrenzungsfläche der Umlenkstückaufnahmerinne abgedeckt ist und von dem sekundären umlenkstückseitigen Querkanal zu je einer Umlenkrinne zweier benachbarter Umlenkbogenabschnitte hinläuft.

Bei Schmiermittelversorgungssystemen der hier betrachteten Linearführungseinrichtungen tritt häufig das Problem auf, verschiedene Schmiermittelverbraucherstellen gleichmäßig mit Schmiermittel zu versorgen. Diese Forderung kann grundsätzlich dadurch erfüllt werden, daß die Durchflußwiderstände zu den einzelnen Schmiermittelverbraucherstellen annähernd gleichmäßig ausgebildet werden. Dies kann aber gelegentlich zu überhöhten Anforderungen an die Präzision der Schmiermittelkanalherstellung führen. Um mit einer auch bei üblichen Techniken der Gießund Spritzgußherstellung erreichbaren Präzision auszukommen, erweist es sich deshalb als vorteilhaft, daß in dem Schmiermittelverteilungssystem innerhalb der Endplatte mindestens eine Drosselstelle oder ein Rückschlag- oder/und Überdruckventil vorgesehen ist. In diesem Fall sind die Durchflußwiderstände durch eine oder mehrere Drosselstellen bestimmt, oder auch durch ein oder mehrere Rückschlag- oder/und Überdruckventile. Will man z.B. das verbraucherseitige Ende eines Schmiermittelversorgungssystems mit zwei Verbraucherstellen verbinden, so ist es verhältnismäßig einfach, in jedem der beiden Zweige je eine Drosselstelle oder je ein Rückschlag- oder/und Überdruckventil so auszubilden, daß diese dem Schmiermittel zu jeder der Verbraucherstellen einen annähernd gleichen Durchflußwiderstand darbieten. In diesem Fall ist gewährleistet, daß bei Anlegen eines Schmiermittelzufuhrdrucks beide Verbraucherstellen ausreichend und gleichmäßig mit Schmiermittel versorgt werden. Bei Abwesenheit solcher Drosselstellen oder Rückschlag- oder/und Überdruckventilen könnte es infolge unvermeidlich schwankender Präzision in der Herstellung der Schmiermittelzuflüsse und infolge unvermeidlicher Leckabflüsse von den einzelnen Verbraucherstellen dazu kommen, daß sich das Schmiermittel, insbesondere ein niedrig-viskoses oder flüssiges Schmiermittel, bevorzugt zu einer der Verbraucherstellen vorschiebt und ggf. an dieser durch Leckage entweicht, während eine oder mehrere andere Verbraucherstellen nicht hinreichend mit Schmiermittel gefüllt und versorgt werden.

Die Drosselstellen oder Rückschlag- oder/und Überdruckventile können grundsätzlich an beliebigen Stellen innerhalb des Schmiermittelverteilungssystems angeordnet werden. Ein Höchstmaß an Gleichmäßigkeit in der Versorgung einzelner Schmiermittelverbraucherstellen läßt sich dann erreichen, wenn an mindestens einer Ausmündungsstelle des innerhalb der Umlenkstückaufnahmerinne untergebrachten Teils des Schmiermittelversorgungssystems zu einem Umlenkbogenabschnitt ein Rückschlag- oder/und Überdruckventil angeordnet ist, welches jedenfalls zu dem Umlenkbogenabschnitt hin offen ist. Sind zwei Umlenkbogenabschnitte der jeweiligen Umlenkstückaufnahmerinne zugeordnet, so wird man dieser zwei Rückschlag- oder/und Überdruckventile nachschalten, welche je zu einer Verbraucherstelle, d.h. je zu einem Umlenkbogenabschnitt, führen. Dann ist eine gleichmäßige Versorgung beider oder auch mehrerer Verbraucherstellen gewährleistet, auch wenn die normalen Leitungswege zu diesen Verbraucherstellen in ihren Querschnitten schwanken und/oder unterschiedliche Leckagestellen den beiden Verbraucherstellen nachgeordnet sind. Die Rückschlag- oder/und Überdruckventile wird man so ausführen, daß sie jedenfalls zu dem Umlenkbogenabschnitt hin öffnen, den sie versorgen sollen. Während für die gleichmäßige Versorgung einzelner Verbraucherstellen insbesondere die Überdruckfunktion der einzelnen Rückschlag- oder/und Überdruckventile verantwortlich ist, kann die Rückschlagfunktion in anderer Situation von Bedeutung sein: Man muß mit der Möglichkeit rechnen, daß die Linearführungseinrichtung in unterschiedlichen Orientierungen im Raum eingebaut wird. Dann kann - insbesondere bei niedrig-viskosem und flüssigem Schmiermittel - ein Schmiermittelrückfluß von der jeweiligen Schmiermittelverbraucherstelle in das Schmiermittelversorgungssystem oder/und ein Schmiermittelübergang von einer Verbraucherstelle zu einer anderen Verbraucherstelle stattfinden. Dies kann dazu führen, daß eine oder mehrere Verbraucherstellen übermäßig mit Schmiermittel versorgt werden und andere unterversorgt sind. Ist jeder dieser Verbraucherstellen ein Ventil mit Rückschlagwirkung zugeordnet, so ist auch diese Gefahr unterbunden. Rückschlagwirkung soll dabei besagen, daß ein Ventil in einer ersten Durchflußrichtung einen kleineren Widerstand darbietet, also insbesondere in der Durchflußrichtung zu der jeweiligen Verbraucherstelle hin, während ein Rückfluß von der Verbraucherstelle zu dem Schmiermittelversorgungssystem einem größeren Durchflußwiderstand unterliegt.

Eine Drosselstelle kann durch eine Verengung im Schmiermittelkanal gebildet sein. Für den Fall eines Rückschlag- oder/und Überdruckventils kann man von einer einstückig mit dem Umlenkstück hergestellten elastisch auslenkbaren Ventillamelle Gebrauch machen. Ist ein Umlenkstück mehreren Umlenkrinnen zugeordnet, so kann man an den je einer Umlenkrinne zugekehrten Enden einer beide Umlenkrinnen versorgenden Mündungsrinne je ein Rückschlag- und/oder Überdruckventil vorsehen. Dieses Rückschlag- oder/und Überdruckventil kann insbesondere als ein Lamellenventil einstückig mit dem Umlenkstück ausgebildet sein, in welchem die Mündungsrinne eingelassen ist. Das Lamellenventil kann dabei in einer die jeweilige Umlenkrinne teilweise überdeckenden Ventilkammer des Umlenkstücks angeordnet sein. Um die Überdruck- und/oder Rückschlagfunktion des Ventils möglichst genau bei geringem Herstellungsaufwand definieren zu können, kann man das Lamellenventil mit einer Ventillamelle mit einer der Rückenfläche des Umlenkstücks zugekehrten freien Kante ausführen, im übrigen aber den Rand der Ventillamelle im wesentlichen einstückig mit dem Umlenkstück zusammenhängen lassen. Dann weicht die Ventillamelle, welche mit ihrer Hauptfläche im wesentlichen senkrecht zu dem Verlauf der Mündungsrinne steht, je nach Durchströmungsrichtung aus. Ihr Ausreichwiderstand kann durch einfache konstruktive Maßnahmen in Abhängigkeit von der Durchflußrichtung variabel sein, wodurch sowohl die Überdruckfunktion als auch die Rückschlagfunktion wunschgemäß eingestellt werden können. Beispielsweise kann die der Rückenfläche des Umlenkstücks zugekehrte freie Kante der Ventillamelle so angeordnet sein, daß sie mit einer Begrenzungskante der Umlenkrinne annähernd zusammenfällt. Dann tritt bei einem Überdruck in einer ersten Richtung eine sprungartige Verkleinerung des Durchflußwiderstands auf. Es ist auch möglich, im Bereich einer Verbindungsstelle zwischen dem Schmiermittelkanal und dem innerhalb der Umlenkstückaufnahmerinne liegenden Teil des Schmiermittelversorgungssystems ein Rückschlag- und/oder Überdruckventil anzuordnen.

Wenn die Führungsschiene von dem Lagerhauptkörper im wesentlichen U-förmig umgriffen wird und der Lagerhauptkörper demgemäß mit einem Stegteil und zwei Schenkelteilen ausgebildet ist, wobei zwischen jedem der Schenkelteile und einer zugehörigen Seitenfläche der Führungsschiene jeweils mindestens ein Wälzkörperumlauf, vorzugsweise zwei oder mehrere Wälzkörperumläufe, vorgesehen sind, so ergibt sich eine entsprechende U-förmige Gestaltung auch für die Endplatte bzw. die Endplatten. Das heißt, die Endplatte wird wiederum im wesentlichen U-förmig ausgebildet mit einem Endplattenstegteil und zwei Endplattenschenkelteilen. Dann wird zweckmäßig in jedem der Endplattenschenkelteile eine entsprechende Zahl von Umlenkrinnen gebildet. Im Falle des Vorhandenseins von zwei Umlenkrinnen in einem Endplattenschenkelteil kann diesen eine gemeinsame Umlenkstückaufnahmerinne und ein gemeinsames Umlenkstück zugeordnet sein. Bei einer solchen U-förmigen Konstruktion wird empfohlen, daß sich die Umlenkstückaufnahmerinne und das jeweilige Umlenkstück bis jeweils auf die Höhe des Endplattenstegteils erstrecken und auf der Höhe des Endplattenstegteils mit dem Schmiermittelkanal verbunden sind, wobei dieser Schmiermittelkanal innerhalb des Endplattenstegteils verläuft. Es ergibt sich eine gießtechnisch und spritzgußtechnisch besonders einfache Ausführungsform dann, wenn der Schmiermittelkanal durch den Endplattenstegteil durchgehend zwischen zwei Seitenflächen der beiden Endplattenschenkelteile verläuft.

Man kann dann den Schmiermittelkanal in einem mittleren Bereich des Endplattenstegteils mit einer Schmiermittelanschlußstelle verbinden. Man kann zusätzlich oder alternativ aber auch den Schmiermittelkanal an mindestens einer Seitenfläche eines Endplattenschenkelteils mit einem Schmiermittelanschluß verbinden. Sind mehrere Schmiermittelanschlüsse vorhanden, so ist selbstverständlich an jedem dieser Schmiermittelanschlüsse ein weiteres Rückschlagventil vorzusehen, damit bei Schmiermitteleinleitung durch einen Schmiermittelanschluß das Schmiermittel nicht durch einen anderen wahlweise verwendbaren Schmiermittelanschluß wieder entweichen kann.

Ein innerhalb einer Endplatte verlaufender Schmiermittelkanal kann grundsätzlich in seinem Querschnitt rund gestaltet sein. Da aber die Endplatte an der Endfläche des Lagerhauptkörpers befestigt werden muß und hierzu ggf. mehrere Befestigungsbolzen durch die Endplatte hindurch in den Lagerhauptkörper eingeführt werden müssen, kann es vorteilhaft sein, einen länglichen Querschnitt für die Schmiermittelkanäle vorzusehen, wobei die lange Querschnittsachse annähernd parallel zu der Längsachse der Führungsschiene liegt. Dies hat den Vorteil, daß der verfügbare Flächeninhalt der Endplatte für den Durchgang von Verbindungsbolzen zu dem Lagerhauptkörper bei gleichem Durchflußquerschnitt weniger eingeschränkt wird. Beispielsweise kann der Querschnitt eines innerhalb der Endplatte verlaufenden Schmiermittelkanals halbmondförmig ausgebildet sein, wobei die lange Achse des Halbmondquerschnitts im wesentlichen parallel zur Längsachse der Führungsschiene liegt.

Für verschiedene Führungsaufgaben ist häufig eine unterschiedliche Breite der Führungsschiene und damit eine unterschiedliche Länge des Stegs des zugehörigen Lagerhauptkörpers erforderlich. Dies führt zu entsprechenden unterschiedlichen Steglängen der zu den unterschiedlichen Lagerhauptkörpern gehörenden U-förmigen Endplatten. Um in einer solchen Situation den Formenaufwand für die Herstellung von Endplatten und die unterschiedliche Steglänge in Grenzen halten zu können, wird vorgeschlagen, daß die Endplatte aus einer Mehrzahl von Teilendplatten baukastenartig zusammensetzbar ist, wobei in den einzelnen Teilendplatten Teile des Schmiermittelversorgungssystems angeordnet sind, welche beim Zusammensetzen der Teilendplatten zur Endplatte in eine im wesentliche dichte Verbindung treten. Dieses Prinzip gilt nicht nur bei U-förmigen Endplatten, sondern auch generell. Bei U-förmigen Endplatten hat es jedoch seine besondere Bedeutung: Zur Verbindung der Teile des Schmiermittelversorgungssystems der einzelnen Teilendplatten können Steckverbindungselemente an diesen Teilendplatten einstückig angespritzt oder angegossen sein, welche beim Zusammensetzen der Teilendplatten zwangsläufig in eine im wesentlichen dichte Steckverbindung treten. Beispielsweise können diese Steckverbindungselemente von komplementären, vorzugsweise konischen Vorsprüngen und Versenkungen in Stoßflächen der Teilendplatten gebildet sein. Im Falle einer U-förmigen Endplatte können die Teilendplatten aus jeweils zwei Schenkelendplatten mit je einem schenkelnahen Endplattenstegabschnitt und einem mittleren Endplattenstegabschnitt zusammengesetzt werden.

Wie schon aus der EP-B1-0 211 243 bekannt, kann an jeder Endplatte mindestens ein Führungssteg zur Führung von Wälzkörpern im Bereich des Lagerhauptkörpers befestigt werden oder einstückig angegossen oder angespritzt werden.

Der stoßfreie Übergang der Rollkörper kann noch dadurch verbessert werden, daß an dem Umlenkstück wenigstens ein Positionierungsring angeformt ist, welcher zur Aufnahme in einer Enderweiterung einer Wälzkörperrückführbohrung des Lagerhauptkörpers oder/und in einer an eine Umlenkrinne angrenzenden Ausnehmung der Endplatte ausgebildet ist. Auf diese Weise wird auch die positionsgerechte gegenseitige Anordnung der Endplatte, des Lagerhauptkörpers und des jeweiligen Umlenkstücks beim Zusammenbau erleichtert.

Die Endplatten oder/und die Umlenkstücke können aus Kunststoff gespritzt oder gegossen sein. Der Lagerhauptkörper und die Führungsschiene können aus Metall, insbesondere Stahl, hergestellt sein. Es ist aber auch denkbar, den Lagerhauptkörper und/oder die Führungsschiene aus Leichtmetall herzustellen und ggf. mit Laufflächen aus Stahl auszuführen. Im Falle der Laufflächen am Lagerhauptkörper kann man auch daran denken, auf einer Grundkonstruktion aus Leichtmetall, z. B. Aluminium, schaukelnde Metallplatten anzuordnen, welche die Laufflächen für die Wälzkörper bilden. Die Wälzkörper können grundsätzlich Kugeln oder auch zylindrische oder tonnenförmige Rollen sein.

Die beiliegenden Figuren erläutern die Erfindung anhand von Ausführungsbeispielen; es stellen dar:
- Figur 1: eine perspektivische Ansicht einer erfindungsgemäßen Linearführungseinrichtung;
- Figur 2: einen Teilschnitt nach Linie II-II der Figur 1;
- Figur 3: in einem Schnitt gemäß Figur 2 die Eingriffsverhältnisse zwischen der Führungsschiene und dem Lagerhauptkörper;
- Figur 4: eine Ansicht auf die Anlagefläche einer Endplatte nach Linie IV-IV der Figur 1, teilweise aufgebrochen;
- Figur 5: den Zusammenhang einer Endplatte mit einem Führungssteg für die Wälzkörper;
- Figur 6: eine Seitenansicht der Endplatte in Pfeilrichtung VI der Figur 4;
- Figur 7: einen Schnitt nach Linie VII-VII der Figur 4;
- Figur 8: einen Schnitt nach Linie VIII-VIII der Figur 4;
- Figur 9: einen Schnitt durch ein Umlenkstück nach Linie IX-IX der Figur 4;
- Figur 10: eine Ansicht des Umlenkstücks in Pfeilrichtung X der Figur 9;
- Figur 11: einen Schnitt nach Linie XI-XI der Figur 10;
- Figur 12: eine Ansicht entsprechend Figur 4 auf eine Teilendplatte bei einer anderen Ausführungsform;
- Figur 13: eine Ansicht auf das Umlenkstück zu Figur 12, dieses von hinten betrachtet, und
- Figur 14: einen Schnitt nach Linie XIV-XIV der Figur 13.

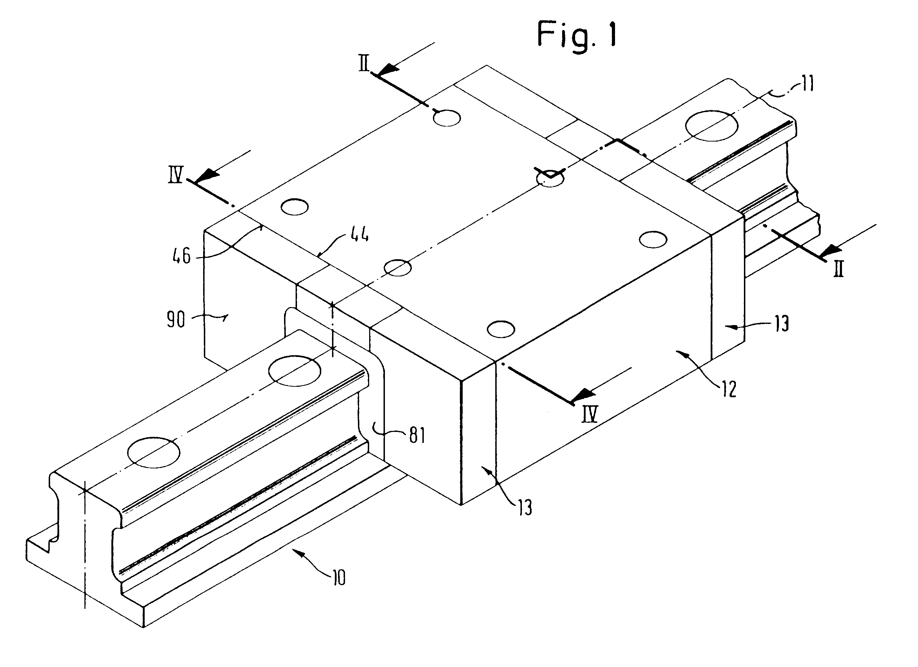

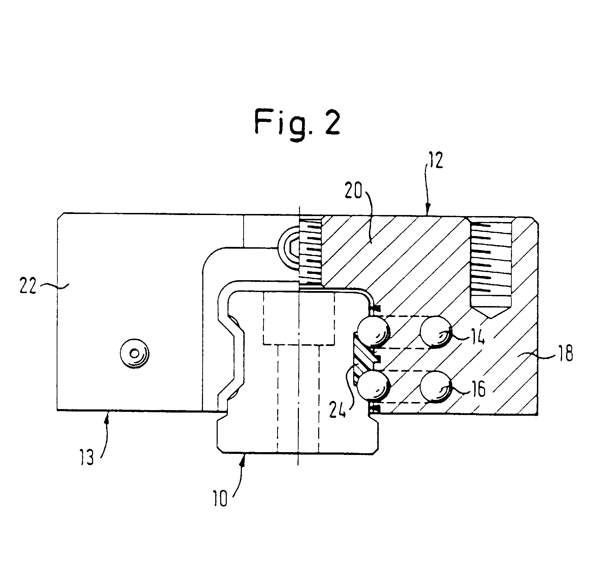

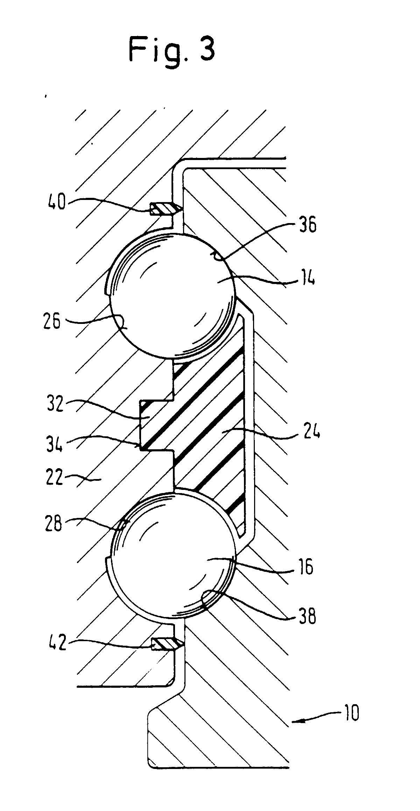

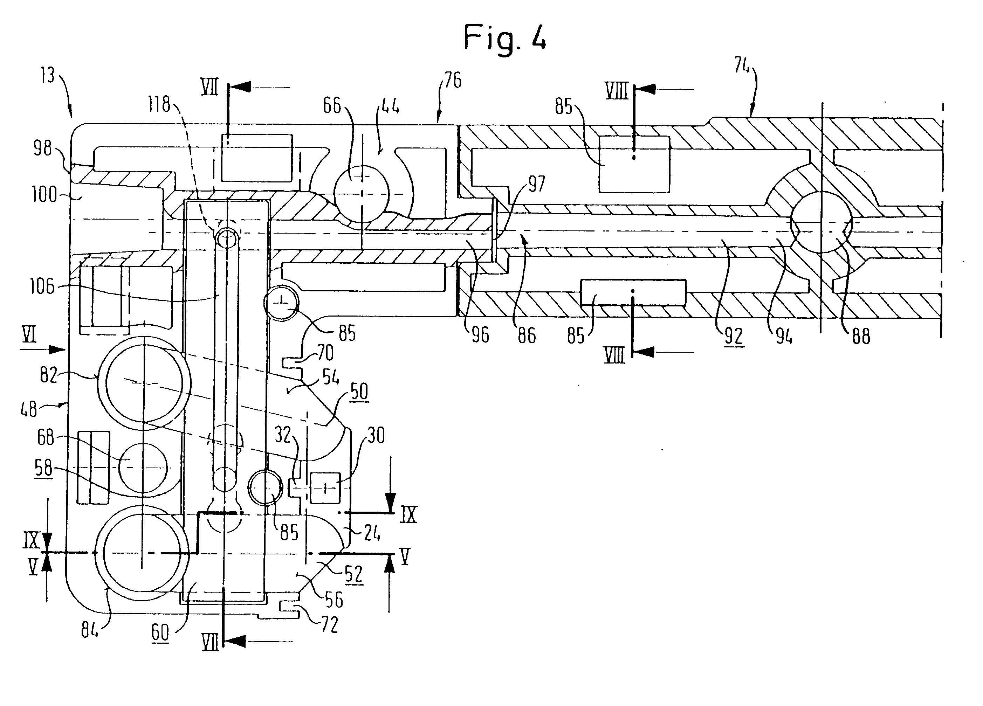

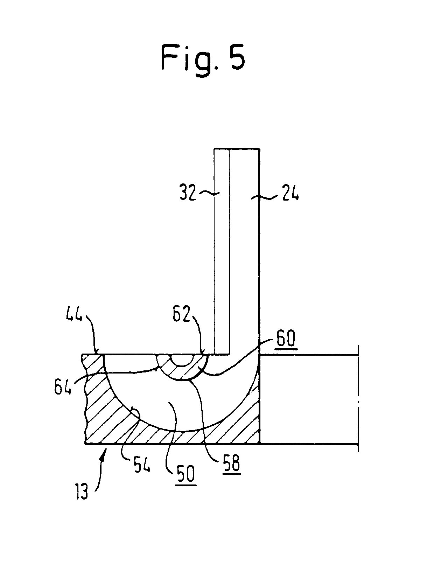

In Figur 1 ist eine Führungsschiene mit 10 bezeichnet. Diese Führungsschiene 10 weist eine Achse 11 auf. Auf der Führungsschiene 10 ist ein Lagerhauptkörper 12 geführt, der an seinen beiden Enden mit je einer Endplatte 13 versehen ist. Bohrungen in dem Lagerhauptkörper 12 sind dazu bestimmt, auf diesem Lagerhauptkörper 12 ein Objekt, beispielsweise einen Werkstückträgerschlitten oder einen Werkzeugträgerschlitten einer Bearbeitungsmaschine, insbesondere einer Werkzeugmaschine, zu führen. In Figur 2 erkennt man, daß der Lagerhauptkörper 12 auf der Führungsschiene 10 im Bereich jeder Seitenfläche durch zwei Kugelumläufe 14,16 geführt ist. Gezeigt sind in Figur 2 die beiden Kugelumläufe eines rechten Schenkels 18 des Lagerhauptkörpers 12, der durch einen Steg 20 mit einem linken Schenkel 22 verbunden ist. Man erkennt, daß die Kugeln der Kugelumläufe durch einen Haltesteg 24 in Eingriff mit den Laufbahnen des Lagerhauptkörpers 12 gehalten sind. Dies ist im einzelnen in Figur 3 dargestellt, wo in Abweichung von Figur 2 der linke Schenkel 22 in rollendem Eingriff mit der Führungsschiene 10 dargestellt ist. Die Kugeln des Kugelumlaufs 14 sind durch den Haltesteg 24 in Eingriff mit einer Lauffläche 26 des linken Schenkels 22 gehalten, während die Kugeln des Kugelumlaufs 16 durch den gleichen Haltesteg 24 in Eingriff mit einer Lauffläche 28 gehalten sind. Der Haltesteg 24 geht von einer Endplatte 13 aus, wie in Figur 5 dargestellt. Der Haltesteg 24 trifft sich an seinem in Figur 5 endplattenfernen Ende mit dem Ende eines weiteren Haltestegs, der von einer gegenüberliegenden Endplatte 13 ausgeht. Die beiden Haltestege 24 sind an ihren zusammenstoßenden Enden miteinander durch Zapfenverbindungen verbunden, wie in Figur 4 bei 30 dargestellt. Im übrigen sind die Haltestege 24 durch Halteleisten 32 in Haltenuten der jeweiligen Schenkel des Lagerhauptkörpers gesichert, wobei diese Haltenuten mit 34 bezeichnet sind. Die Kugeln der Kugelumläufe 14 und 16 liegen an Laufflächen 36 bzw. 38 der Führungsschiene 10 an. Durch Lippendichtungen 40 und 42 ist der die Kugelumläufe 14 und 16 aufnehmende Raum zwischen der Führungsschiene 10 und dem Schenkel 22 des Lagerhauptkörpers 12 abgedichtet.

In Figur 4 erkennt man Einzelheiten der Endplatte 13 und zwar mit Blick auf eine Anlagefläche 44 dieser Endplatte, die gemäß Figur 1 an einer Endfläche 46 des Lagerhauptkörpers 12 anliegend befestigt ist.

In Figur 4 erkennt man zunächst in einem Schenkelteil 48 der Endplatte zwei Umlenkrinnen 50 und 52, welche äußere Umlenkflächen 54 bzw. 56 für Umlenkbogenabschnitte der Kugelumläufe 14,16 bilden. Die beiden Umlenkrinnen 50,52 werden von einer Umlenkstückaufnahmerinne 58 gekreuzt (siehe auch Figur 5). In dieser Umlenkstückaufnahmerinne 58 liegt ein Umlenkstück 60, welches gemäß Figur 5 eine Brustfläche 62 und eine konvex gekrümmte, insbesondere halbkreiszylindrische Rückenfläche 64 aufweist; die Rückenfläche 64 stellt eine radial innere Umlenkfläche für die Kugeln der Umlenkbogenabschnitte beider Kugelumläufe 14,16 dar.

Die Endplatte 13 wird mit Spannbolzen (nicht dargestellt) an der Endfläche 46 des Lagerhauptkörpers befestigt, welche Spannbolzendurchgänge 66 und 68 im Schenkelbereich der Endplatte 13 durchsetzen. An dem Endplattenschenkel 48 erkennt man wieder den Haltesteg 24 mit dem einen Teil einer Zapfenverbindung 30 und mit der Befestigungsleiste 32 sowie Schlitze 70 und 72, die zur Aufnahme der Lippendichtungen 40, 42 gemäß Figur 3 dienen.

Die Endplatte 13 ist, wie aus Figur 4 ersichtlich, aus einem Schenkelteil 48 und einem Stegmittelteil 74 zusammengesetzt. Der Stegmittelteil 74 ist mit einem schenkelnahen Stegteil 76 zusammengestoßen. Dies bedeutet, daß die Endplatte 13 insgesamt aus drei Teilen besteht. In Anpassung an unterschiedliche Breiten von Führungsschienen 10 können unterschiedliche Endplatten dadurch aufgebaut werden, daß unter Beibehaltung der Schenkelteile 48 verschiedene Stegmittelteile 74 verwendet werden.

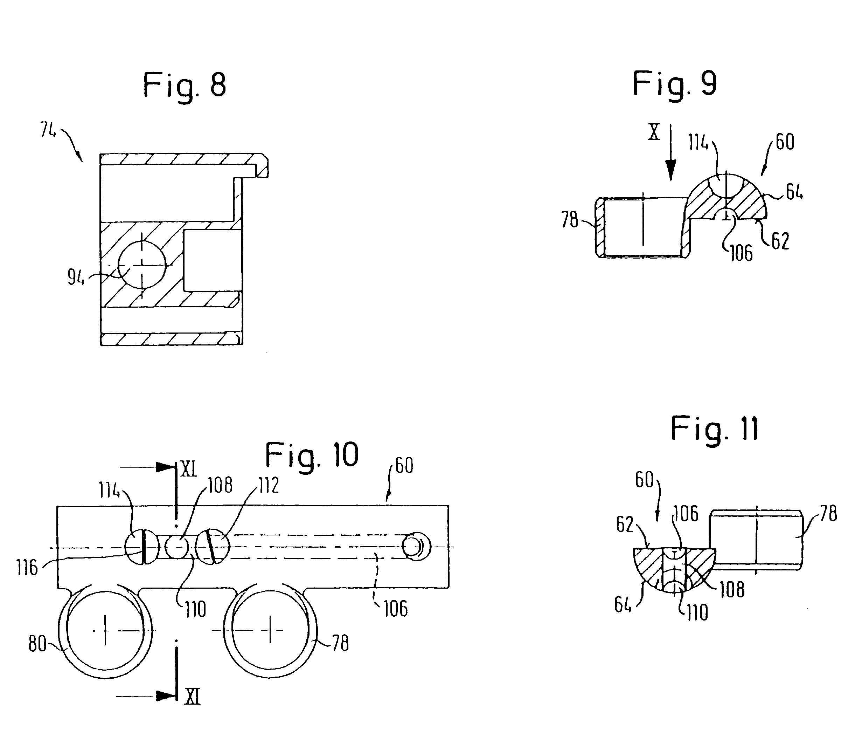

Das Umlenkstück 60 Ist, wie aus Figuren 9, 10 und 11 zu ersehen, mit Positionierungsringen 78 und 80 versehen. Diese Positionierungsringe bilden einen Teil des Umlaufwegs des jeweiligen Kugelumlaufs und werden, wie aus Figur 4 ersichtlich, jeweils mit einem Ende in eine Ausnehmung 82 bzw. 84 der Endplatte versenkt, während sie mit ihren jeweils anderen Enden in Erweiterungen von Kugelrückführbohrungen (nicht dargestellt) des Lagerhauptkörpers 12 eingesteckt werden.

Auf der dem Lagerhauptkörper 12 fernen Seite 90 der Endpiatte 13 kann, wie aus Figuren 1, 6 und 7 ersichtlich, eine U-förmige Dichtleiste 81 in eine Dichtleistenausnehmung 83 der Endplatte 13 eingelegt werden, deren Innenkontur der Außenkontur der Führungsschiene 10 angepaßt ist. Diese U-förmige Dichtleiste kann zusammen mit den Lippendichtungen 40 , 42 eine Schmiermittelkammer bilden, innerhalb welcher die Kugelumläufe 14 und 16 im wesentlichen dicht eingeschlossen sind. Die U-förmigen Dichtleisten 81 werden auf der Endplatte vermittels Befestigungsausnehmungen 85 einschnappend befestigt.

Innerhalb der Endplatte 13 ist ein Schmiermittelversorgungssystem untergebracht, das insgesamt mit 86 bezeichnet ist.

Zentral innerhalb des mittleren Endplattenstegteils 74 ist eine Anschlußöffnung 88 des Schmiermittelversorgungssystems vorgesehen, welche in die von dem Lagerhauptkörper abgelegene Seite 90 der Endplatte ausmündet und als Sackbohrung ausgebildet ist, welche vor der Anlagefläche 44 der Endplatte endet. Dieser Anschluß 88 ist so ausgebildet, daß eine Fettpresse oder Schmierflüssigkeitspresse angesetzt werden kann. Beispielsweise kann in den Anschluß 88 ein Schmiernippel mit Rückschlagventil eingesetzt sein, welcher das Einpressen von Schmiermittel erlaubt, den Rückfluß aber verhindert. An den Anschluß 88 schließt sich ein parallel zur Anlagefläche 44 verlaufender Schmiermittelkanal 92 an, welcher aus einem Teilkanal 94 innerhalb des mittleren Endplattenstegteils 74 und einem Teilkanal 96 innerhalb des schenkelnahen Endplattenstegteils 76 besteht. Die beiden Teilkanäle 94 und 96 sind durch eine Kupplung 97 an der Grenze zwischen den beiden Stegteilen 74 und 76 im wesentlichen dicht miteinander verbunden. Die Kupplung 97 ist, wie Figur 4 zeigt, durch einen Kupplungsvorsprung und eine Kupplungsausnehmung gebildet, welche zur besseren Dichtung und leichteren Entformung konisch ausgeführt sein können.

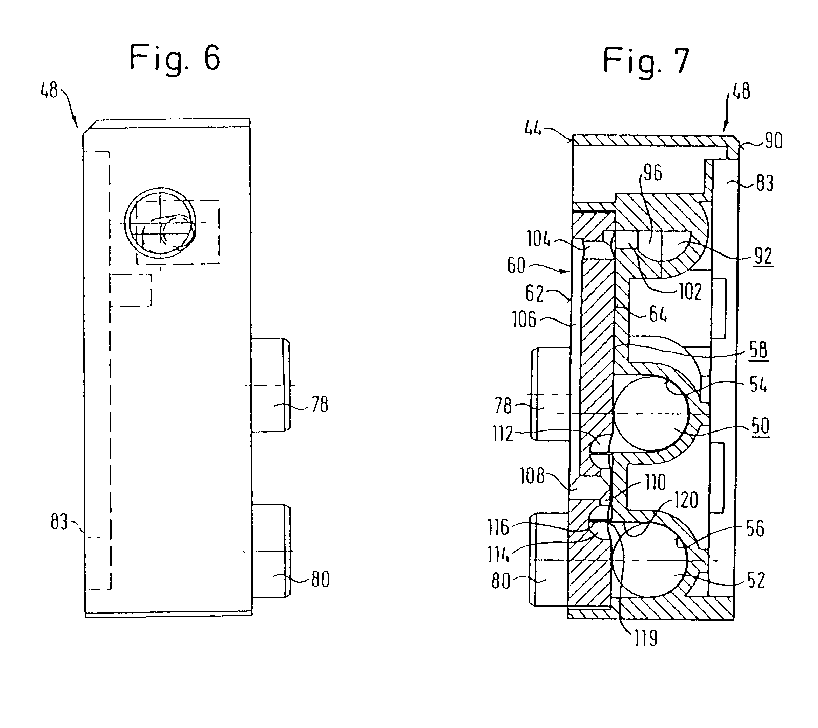

Der Schmiermittelkanal 92 läuft mit seinem Kanalabschnitt 96 hinter der Umlenkstückaufnahmerinne 58 vorbei, d.h. kreuzt diese, wie aus Figur 7 ersichtlich. Der Kanalabschnitt 96 ist bis zu einer Seitenfläche 98 der Endplatte 13 fortgeführt und ist in einem der Seitenfläche 98 nahen Bereich zu einem konischen Anschluß 100 erweitert, der entweder einen Verschlußstopfen oder als Ersatz oder zusätzlich zu einem Anschlußnippel in dem Anschluß 88 einen weiteren Anschlußnippel aufnehmen kann. Das gleiche gilt sinngemäß für den Bereich des in Figur 4 nicht dargestellten Schenkelteils der Endplatte 13.

Wie aus Figur 7 ersichtlich, ist der Schmiermittelkanalabschnitt durch eine Querbohrung 102 der Endplatte in Verbindung mit einer primären Querbohrung 104 des Umlenkstücks 60 gebracht. An der Brustseite 62 des Umlenkstücks 60 ist eine Brustflächenrinne 106 angeordnet, die in Längsrichtung des Umlenkstücks 60 verläuft. Die Brustflächenrinne 106 ist durch Anlage an der Endfläche 46 des Lagerhauptkörpers 12 abgedeckt. Die Querbohrungen 102 und 104 verlaufen im wesentlichen orthogonal zu der Endfläche 46 des Lagerhauptkörpers 12. Von der Brustflächenrinne 106 geht eine sekundäre Querbohrung 108 aus, welche ebenfalls im wesentlichen orthogonal zu der Endfläche 46 des Lagerhauptkörpers verläuft und in die Umlenkfläche, d.h. die zylindrisch gekrümmte Rückenfläche 64 des Umlenkstücks 60 ausmündet. Im Scheitelbereich der Rückenfläche 64 des Umlenkstücks 60 ist eine Mündungsrinne 110 angeordnet, die mit der sekundären Querbohrung 108 in Verbindung steht und zu den beiden Umlenkrinnen 50, 52 führt, um Schmiermittel zu den Umlenkrinnen und damit zu den Kugelumläufen 14, 16 zu liefern.

An den Enden der Mündungsrinne 110 sind Ventilkammern 112 und 114 angebracht, die im Prinzip gleichartig ausgebildet sind. Innerhalb der annähernd halbsphärischen Ventilkammer 114 ist eine Ventilmembrane 116 angeordnet, welche ungefähr halbkreisförmig ist, längs ihres Halbkreisbogens einstückig mit dem Umlenkstück 60 zusammenhängt und mit ihrer im wesentlichen geradlinigen freiliegenden Kante 119 einer Randkante 120 der Umlenkrinne 52 gegenübersteht. Man kann sich ohne weiteres vorstellen, daß bei einem erhöhten Schmiermitteldruck, wie er durch Anlegen einer Schmiermittelpresse bei 88 oder 100 erzeugt werden kann, Schmiermittel bis in den Bereich der Ventilkammer 114 bzw. 112 gelangt und daß dann die jeweilige Ventilmembran, z.B. 116, ausgelenkt wird, so daß Schmiermittel in den Bereich der jeweiligen Umlenkrinne gelangt. Die Ventilmembranen können so ausgebildet sein, daß sie dem Zufluß zu den beiden Umlenkrinnen gleichen oder auch gezielt unterschiedlichen Widerstand darbieten. Auf diese Weise ist sichergestellt, daß die richtigen Schmiermittelmengen in die Umlenkrinnen 50, 52 gelangen. Ein Rückfluß von Schmiermittel aus den Umlenkrinnen ist durch die Ventilmembranen praktisch unmöglich gemacht. Damit ist auch eine Umverteilung von Schmiermittel zwischen den beiden Umlenkrinnen unterbunden.

Auf dem Weg von dem Anschluß 88 zu den Umlenkrinnen 50, 52 können weitere Drosselstellen oder/und Ventile angeordnet sein, um den Schmiermittelfluß entsprechend zu beeinflussen. Diese Drosselstellen und/oder Ventile können innerhalb des Umlenkstücks 60 oder im Bereich des Schmiermittelkanals 92 oder an der Verbindungsstelle zwischen Schmiermittelkanal 92 und Brustflächenrinne 106 angeordnet sein, vorzugsweise in einem Annäherungs- oder Kreuzungsbereich 118. Der Schmiermittelfluß kann auch durch die Gestaltung und gegenseitige Zuordnung der Querbohrungen 102 und 104 bzw. 108 beeinflußt werden, ferner durch die Querschnittsformen und Übergänge zwischen den Schmiermittelkanalabschnitten 94 und 96. Man erkennt aus Figur 7, daß der Schmiermittelkanalabschnitt 96 einen halbmondförmigen Querschnitt mit parallel zur Achse 11 der Führungsschiene 10 verlaufender langer Querschnittsachse besitzt, während der Schmiermittelkanalabschnitt 94 gemäß Figur 8 Vollkreisquerschnitt besitzt.

Die Befestigungsstellen 66, 68 können auf die Schenkelteile 48 der Endplatten 13 beschränkt bleiben, da innerhalb des Schmiermittelkanalabschnitts 94 des Schmiermittelkanals 92 der Schmiermitteldruck vollständig innerhalb des Mittelteils 74 des Endplattenstegs aufgenommen wird und keine Abhebewirkung zwischen dem Stegteil 74 und dem Lagerhauptkörper 12 entsteht.

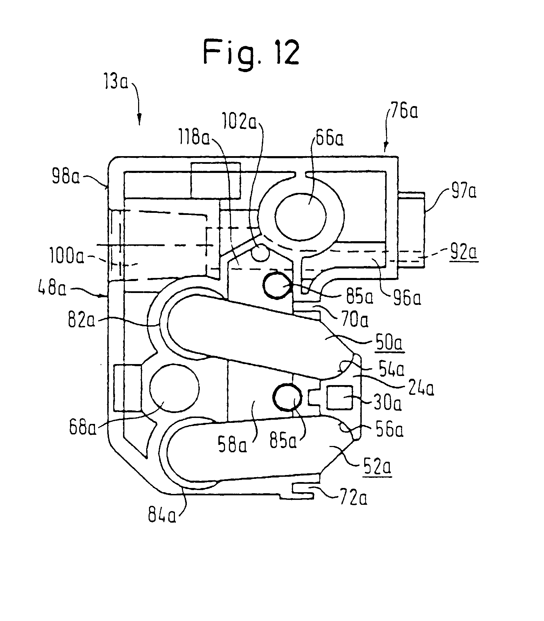

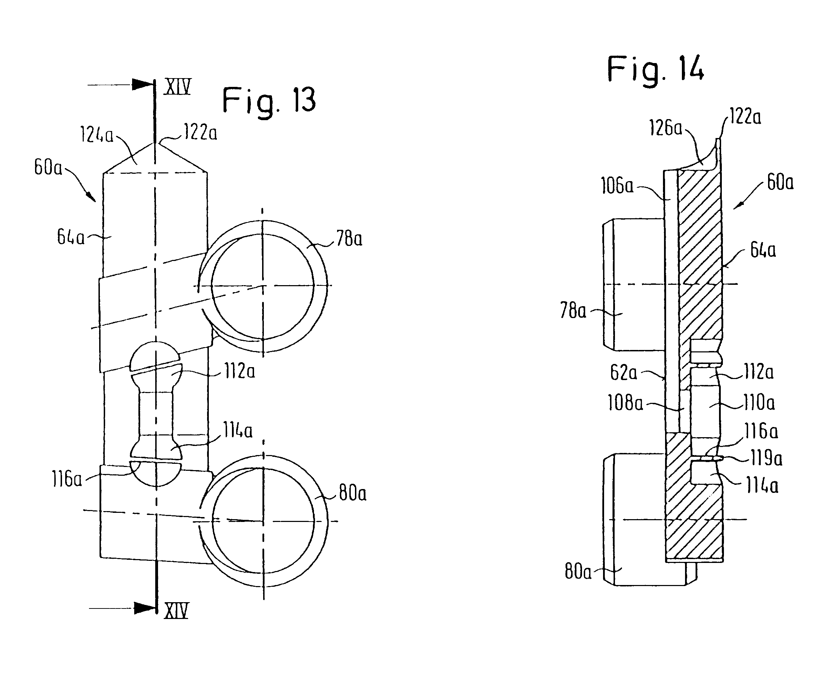

In den Figuren 12, 13 und 14 erkennt man eine alternative Gestaltung der Endplatte 13a und des zugehörigen Umlenkstücks 60a. Analoge Elemente sind mit den gleichen Bezugszeichen versehen wie in den Figuren 1-11, jeweils unter Hinzusetzung des Index a.
Man erkennt in Figur 14 am oberen Ende 122a des Umlenkstücks 60a eine Ventillamelle 124a, welche parallel zur Hauptebene der Endplatte 13a liegt, wenn das Umlenkstück 60a in die Endplatte eingesetzt ist. Diese Ventillamelle 124a liegt in Überdeckung vor dem Ende der Querbohrung 102a der Endplatte (siehe Figur 12). Nur bei Auftreten eines erhöhten Schmiermitteldrucks in dem Schmiermittelkanalabschnitt 96a hebt die Ventillamelle 124a von dem Ende des Querkanals 102a ab, so daß Schmiermittel weiter in Richtung auf die Verbraucherstellen fließen kann. Ein entsprechendes Ventil ist auf der rechten Seite der Endplatte (in Figur 12 nicht dargestellt). Auf diese Weise ist sichergestellt, daß die Durchflußwiderstände und Druckabfälle auf dem Weg zu den Verbraucherstellen schon im Kreuzungsbereich 118a abgeglichen werden, unabhängig davon, ob durch den Mittelanschluß bei 88 (Figur 4) oder durch den Seitenanschluß 100a Schmiermittel zugeführt wird. Im übrigen entspricht die Ausführungsform nach den Figuren 12-14 der Ausführungsform nach den Figuren 1-11. Die Flexibilität der Ventillamelle 124a kann durch einen Versteifungssteg 126a richtungsabhängig variiert werden.

## Patentansprüche

1. Linearführungseinrichtung, umfassend eine Führungsschiene (10) mit einer Längsachse (11) und einen auf dieser Führungsschiene (10) längs dieser Achse (11) durch Wälzkörperumläufe (14,16) geführten Lagerhauptkörper (12),
wobei an dem Lagerhauptkörper (12) an mindestens einer Endfläche (46) des Lagerhauptkörpers (12) eine Endplatte (13) mit einer der Endfläche (46) des Lagerhauptkörpers (12) zugekehrten Anlagefläche (44) anliegt,
wobei weiter in der Anlagefläche (44) der Endplatte (13) für mindestens einen Wälzkörperumlauf (14,16) eine Umlenkrinne (50,52) versenkt angeordnet ist, welche für einen Umlenkbogenabschnitt des betreffenden Wälzkörperumlaufs (14,16) eine äußere Umlenkfläche (54,56) bildet,
wobei weiter in der Anlagefläche (44) eine die Umlenkrinne (50,52) kreuzende Umlenkstückaufnahmerinne (58) zur Aufnahme eines die Umlenkrinne (50,52) kreuzenden Umlenkstücks (60) versenkt ausgebildet ist,
wobei weiter das Umlenkstück (60) mit einer endflächennahen Brustfläche (62) der Endfläche (46) zugekehrt ist und außerdem eine der äußeren Umlenkfläche (54,56) gegenüberliegende konvexe Rückenfläche (64) aufweist, welche Rükkenfläche (64) eine der äußeren Umlenkfläche (54,56) gegenüberliegende innere Umlenkfläche (64) für den Umlenkbogenabschnitt bildet,
wobei weiter in der Endplatte (13) mindestens ein Teil (86) eines Schmiermittelversorgungssystems für den mindestens einen Wälzkörperumlauf (14,16) untergebracht ist,
wobei weiter ein wälzkörpernaher Teil (104-114) des Schmiermittelversorgungssystems (86) innerhalb der Umlenkstückaufnahmerinne (58) verläuft und im Bereich der inneren Umlenkfläche (64) zu den Wälzkörpern des Wälzkörperumlaufs (14,16) hin offen ist,
dadurch gekennzeichnet,
daß das Schmiermittelversorgungssystem (86) einen innerhalb der Endplatte (13) im wesentlichen parallel zu der Anlagefläche (44) verlaufenden Schmiermittelkanal (92) umfaßt, welcher in einem Kanalquerschnitt durch das Material der Endplatte (13) ringsum einstückig begrenzt ist und in einem Annäherungsbereich (118) zu der Umlenkstückaufnahmerinne (58) mit dem in der Umlenkstückaufnahmerinne (58) untergebrachten Teil (104-114) des Schmiermittelversorgungssystems (86) verbunden ist.

2. Linearführungseinrichtung nach Anspruch 1,
dadurch gekennzeichnet,
daß die Umlenkstückaufnahmerinne (58) einen in ihrer Längsrichtung von einer Kreuzungsstelle mit der Umlenkrinne (50,52) beabstandeten Endabschnitt aufweist, welcher in einem Annäherungsbereich (118) zu dem Schmiermittelkanal (92) liegt, und daß eine Verbindung zwischen dem Schmiermittelkanal (92) und dem innerhalb der Umlenkstückaufnahmerinne (58) liegenden Teil (104-114) des Schmiermittelversorgungssyszems (86) im Bereich dieses Endabschnitts der Umlenkstückaufnahmerinne (58) angeordnet ist.

3. Linearführungseinrichtung nach einem der Ansprüche 1 und 2, dadurch gekennzeichnet,
daß der Schmiermittelkanal (92) im wesentlichen parallel zu der Anlagefläche (44) verläuft und die Umlenkstückaufnahmerinne (58) in einem an die Rückenfläche (64) des Umlenkstücks (60) angrenzenden Bodenbereich (118) kreuzt oder anschneidet, wobei im Bereich dieser Kreuzung bzw. Anschneidung (118) eine Verbindung zwischen dem Schmiermittelkanal (92) und dem innerhalb der Umlenkstückaufnahmerinne (58) liegenden Teil (104-114) des Schmiermittelversorgungssystems (86) hergestellt ist.

4. Linearführungseinrichtung nach einem der Ansprüche 1-3,
dadurch gekennzeichnet,
daß bei Betrachtungsrichtung parallel zur Längsachse (11) der Führungsschiene (10) der Schmiermittelkanal (92) die Umlenkstückaufnahmerinne (58) unter einem angenähert rechten Winkel kreuzt oder schneidet.

5. Linearführungseinrichtung nach einem der Ansprüche 1-4,
dadurch gekennzeichnet,
daß der innerhalb der Umlenkstückaufnahmerinne (58) liegende Teil (104-114) des Schmiermittelversorgungssystems (86) eine Brustflächennut (106) aufweist, welche in Längsrichtung des Umlenkstücks (60) in dessen Brustfläche (62) verläuft und durch die Endfläche (46) des Lagerhauptkörpers (12) abgedeckt ist.

6. Linearführungseinrichtung nach Anspruch 5,
dadurch gekennzeichnet,
daß die Brustflächennut (106) mit dem Schmiermittelkanal (92) durch einen umlenkstückseitigen, primären Querkanal (104) verbunden ist, welcher das Umlenkstück (60) im wesentlichen orthogonal zur Brustfläche (62) durchsetzt.

7. Linearführungseinrichtung nach Anspruch 6,
dadurch gekennzeichnet,
daß der umlenkstückseitige, primäre Querkanal (104) an einen endplattenseitigen Querkanal (102) anschließt, welcher im wesentlichen orthogonal zu der Anlagefläche (44) der Endplatte (13) verläuft und mit dem Schmiermittelkanal (92) in Verbindung steht.

8. Linearführungseinrichtung nach einem der Ansprüche 5-7,
dadurch gekennzeichnet,
daß die Brustflächennut (106) durch einen umlenkstückseitigen, sekundären Querkanal (108) mit einem Schmiermittelausmündungssystem (110-114) im Bereich der Rückenfläche (64) des Umlenkstücks (60) verbunden ist.

9. Linearführungseinrichtung nach Anspruch 8,
dadurch gekennzeichnet,
daß das Umlenkstück (60) den Umlenkbogenabschnitten zweier Wälzkörperumläufe (14,16), diese beiden Umlenkbogenabschnitte kreuzend, zugeordnet ist und daß der umlenkstückseitige, sekundäre Querkanal (108) das Umlenkstück (60) an einer Stelle zwischen respektiven Kreuzungsstellen des Umlenkstücks (60) mit den beiden Umlenkbogenabschnitten durchsetzt.

10. Linearführungseinrichtung nach Anspruch 9,
dadurch gekennzeichnet,
daß der umlenkstückseitige sekundäre Querkanal (108) mit einer in der konvexen Rückenfläche (64) des Umlenkstücks (60) angeordneten, im wesentlichen parallel zu dessen Längserstreckung verlaufenden Mündungsrinne (110) verbunden ist, welche durch eine Rinnenbegrenzungsfläche der Umlenkstückaufnahmerinne (58) abgedeckt ist und von dem sekundären, umlenkstückseitigen Querkanal (108) zu je einer Umlenkrinne (50,52) der beiden Umlenkbogenabschnitte hinläuft.

11. Linearführungseinrichtung nach einem der Ansprüche 1-10,
dadurch gekennzeichnet,
daß in dem Schmiermittelverteilungssystem (86) innerhalb der Endplatte (13) mindestens eine Drosselstelle oder ein Rückschlag- oder/und Überdruckventil (114,116,119,120) vorgesehen ist.

12. Linearführungseinrichtung nach einem der Ansprüche 1-11,
dadurch gekennzeichnet,
daß an mindestens einer Ausmündungsstelle (112,114) des innerhalb der Umlenkstückaufnahmerinne (58) untergebrachten Teils (104-114) des Schmiermittelversorgungssystems (86) zu einem Umlenkbogenabschnitt ein Rückschlagoder/und Überdruckventil (114,116,119,120) angeordnet ist, welches jedenfalls zu dem Umlenkbogenabschnitt hin offen ist.

13. Linearführungseinrichtung nach Anspruch 11 oder 12,
dadurch gekennzeichnet,
daß das Rückschlag- oder/und Überdruckventil (114,116,119,120) von einer einstückig mit dem Umlenkstück (60) hergestellten, elastisch auslenkbaren Ventillamelle (116) gebildet ist.

14. Linearführungseinrichtung nach Anspruch 11,
dadurch gekennzeichnet,
daß an den je einer Umlenkrinne (50,52) zugekehrten Enden der Mündungsrinne (110) je ein Rückschlag- oder/und Überdruckventil (114,116,119,120) angeordnet ist.

15. Linearführungseinrichtung nach Anspruch 14,
dadurch gekennzeichnet,
daß das Rückschlag- oder/und Überdruckventil (114,116,119,120) als Lamellenventil einstückig mit dem Umlenkstück (60) ausgebildet ist.

16. Linearführungseinrichtung nach Anspruch 15,
dadurch gekennzeichnet,
daß das Lamellenventil in einer sich mit der jeweiligen Umlenkrinne (50,52) teilweise überdeckenden Ventilkammer (112,114) des Umlenkstücks (60) angeordnet ist.

17. Linearführungseinrichtung nach Anspruch 16,
dadurch gekennzeichnet,
daß das Lamellenventil eine Lamelle (116) mit einer der Rückenfläche (64) des Umlenkstücks (60) zugekehrten freien Kante (119) aufweist, wobei die Lamelle (116) im übrigen aber auf ihrem Umfang im wesentlichen einstückig mit dem Umlenkstück (60) zusammenhängt.

18. Linearführungseinrichtung nach Anspruch 17,
dadurch gekennzeichnet,
daß die freie Kante (119) der Lamelle (116) mit einer Begrenzungskante (120) einer Umlenkrinne (50,52) annähernd zusammenfällt.

19. Linearführungseinrichtung nach einem der Ansprüche 11-18,
dadurch gekennzeichnet,
daß das Rückschlag- oder/und Überdruckventil (102a,124a) im Bereich einer Verbindungsstelle (118a) zwischen dem Schmiermittelkanal (92a) und dem innerhalb der Umlenkstückaufnahmerinne (58a) liegenden Teil des Schmiermittelversorgungssystems angeordnet ist.

20. Linearführungseinrichtung nach einem der Ansprüche 1-19,
dadurch gekennzeichnet,
daß der Lagerhauptkörper (12) die Führungsschiene (10) im wesentlichen U-förmig umgreift und hierzu mit einem Stegteil (20) und zwei Schenkelteilen (18,22) ausgebildet ist, wobei zwischen jedem der Schenkelteile (18,22) und einer zugehörigen Seitenfläche der Führungsschiene (10) jeweils mindestens ein Wälzkörperumlauf (14,16), vorzugsweise zwei oder drei Wälzkörperumläufe, vorgesehen sind, und daß demgemäß auch die Endplatte (13) im wesentlichen U-förmig ausgebildet ist mit einem Endplattenstegteil (74,76) und zwei Endplattenschenkelteilen (48), wobei in jedem der Endplattenschenkelteile (48) eine entsprechende Zahl von Umlenkrinnen (50,52) vorgesehen ist.

21. Linearführungseinrichtung nach Anspruch 20,
dadurch gekennzeichnet,
daß im Falle des Vorhandenseins von zwei Umlenkrinnen (50,52) in einem Endplattenschenkelteil (48) diesen eine gemeinsame Umlenkstückaufnahmerinne (58) und ein gemeinsames Umlenkstück (60) zugeordnet sind.

22. Linearführungseinrichtung nach Anspruch 20 oder 21,
dadurch gekennzeichnet,
daß sich die Umlenkstückaufnahmerinne (58) und das Umlenkstück (60) bis jeweils auf die Höhe des Endplattenstegteils (74,76) erstrecken und auf der Höhe des Endplattenstegteils (74,76) mit dem Schmiermittelkanal (92) verbunden sind, wobei dieser Schmiermittelkanal (92) innerhalb des Endplattenstegteils (74,76) verläuft.

23. Linearführungseinrichtung nach Anspruch 22,
dadurch gekennzeichnet,
daß der Schmiermittelkanal (92) durch den Endplattenstegteil (74,76) durchgehend zwischen zwei Seitenflächen (98) der beiden Endplattenschenkelteile (48) verläuft.

24. Linearführungseinrichtung nach einem der Ansprüche 20-23,
dadurch gekennzeichnet,
daß der Schmiermittelkanal (92) in einem mittleren Bereich (74) des Endplattenstegteils (74,76) eine Schmiermittelanschlußstelle (88) aufweist.

25. Linearführungseinrichtung nach einem der Ansprüche 23 und 24, dadurch gekennzeichnet,
daß der Schmiermittelkanal (92) an mindestens einer Seitenfläche (98) eines Endplattenschenkelteils (48) einen Schmiermittelanschluß (100) aufweist.

26. Linearführungseinrichtung nach einem der Ansprüche 1-25,
dadurch gekennzeichnet,
daß der Schmiermittelkanal (92) wenigstens auf einem Teil (96) seiner Länge länglichen, insbesondere halbmondförmigen, Querschnitt besitzt, wobei die lange Achse des länglichen Querschnitts im wesentlichen parallel zur Längsachse (11) der Führungsschiene (10) liegt.

27. Linearführungseinrichtung nach einem der Ansprüche 1-26,
dadurch gekennzeichnet,
daß die Endplatte (13) aus einer Mehrzahl von in Fließrichtung des Schmiermittels im Schmiermittelkanal (92) aneinander anschließenden Teilendplatten (48-76,74) baukastenartig zusammensetzbar ist, wobei in den einzelnen Teilendplatten (48-76,74) Teile (96,94) des Schmiermittelversorgungssystems (86) angeordnet sind, welche beim Zusammensetzen der Teilendplatten (48-76,74) zur Endplatte (13) in eine im wesentlichen dichte Verbindung treten.

28. Linearführungseinrichtung nach Anspruch 27,
dadurch gekennzeichnet,
daß zur Verbindung der Teile (96,94) des Schmiermittelversorgungssystems (86) an den Teilendplatten (48-76,74) Steckverbindungselemente (bei 97) einstückig angespritzt oder angegossen sind, welche beim Zusammensetzen der Teilendplatten (48-76,74) zwangsläufig in eine im wesentlichen dichte Steckverbindung treten.

29. Linearführungseinrichtung nach Anspruch 28,
dadurch gekennzeichnet,
daß die Steckverbindungselemente (bei 97) von komplementären, vorzugsweise konischen, Vorsprüngen und Versenkungen in Stoßflächen der Teilendplatten (48-76,74) gebildet sind.

30. Linearführungseinrichtung nach einem der Ansprüche 27-29,
dadurch gekennzeichnet,
daß die Teilendplatten (48-76,74) zwei Schenkelendplatten (48-76) mit je einem schenkelnahen Endplattenstegabschnitt (76) und einen mittleren Endplattenstegabschnitt (74) umfassen.

31. Linearführungseinrichtung nach einem der Ansprüche 1-30,
dadurch gekennzeichnet,
daß an der Endplatte (13) mindestens ein Führungssteg (24) zur Führung von Wälzkörpern im Bereich des Lagerhauptkörpers (12) befestigbar oder einstückig befestigt ist.

32. Linearführungseinrichtung nach einem der Ansprüche 1-31,
dadurch gekennzeichnet,
daß an dem Umlenkstück (60) wenigstens ein Positionierungsring (78,80) angeformt ist, welcher zur Aufnahme in einer Enderweiterung einer Wälzkörperrückführbohrung des Lagerhauptkörpers (12) oder/und in einer an eine Umlenkrinne angrenzenden Ausnehmung (82,84) der Endplatte (13) ausgebildet ist.

33. Linearführungseinrichtung nach einem der Ansprüche 1-32,
dadurch gekennzeichnet,
daß die Endplatte (13) oder/und das Umlenkstück (60) aus Kunststoff gespritzt oder gegossen ist.

34. Linearführungseinrichtung nach einem der Ansprüche 1-33,
dadurch gekennzeichnet, daß eine Überdruck- und/oder Rückschlagventilanordnung in einem Schmiermittelversorgungssystem (86), insbesondere in einem Schmiermittelversorgungssystem, welches zu mehreren parallel versorgten Schmiermittelverbraucherstellen (50,52) führt, vorgesehen ist, wobei eine in einen Schmiermittelleitungsweg (92,102-114) einragende, zu einer Durchflußrichtung im wesentlichen orthogonale Ventillamelle (116), welche mit einem Teil ihres Umfangs an einer Begrenzungsfläche des Schmiermittelleitungswegs fixiert ist und mit einem Restumfang (119) dieser Begrenzungsfläche des Schmiermittelleitungswegs gegenübersteht und parallel zur Längserstreckung des Schmiermittelleitungswegs in mindestens einer Richtung auslenkbar ist.

35. Linearführungseinrichtung nach Anspruch 34,
dadurch gekennzeichnet,
daß die Ventillamelle (116) in einer ersten Auslenkrichtung einen geringeren und in einer zweiten Auslenkrichtung einen größeren Auslenkwiderstand besitzt.

36. Linearführungseinrichtung nach Anspruch 34 oder 35,
dadurch gekennzeichnet,
daß die Ventillamelle (116) mit ihrem Restumfang (119) im Bereich einer Querschnittserweiterung des Schmiermittelleitungswegs liegt.

## Claims

1. A linear guiding device, comprising a guide rail (10) with a longitudinal axis (11) and a bearing main body (12), guided by rolling body circuits (14, 16) along said axis (11) on said guide rail (10),
wherein at at least one end surface (46) of the bearing main body (12) an end plate (13) with a contact surface (44) facing the end surface (46) of the bearing main body (12) abuts against the bearing main body (12);
wherein, furthermore, a deflection groove (50, 52) is provided immerged into the contact surface (44) of the end plate (13) for at least one rolling body circuit (14, 16), which deflection groove forms an outer deflecting surface (54, 56) for a deflection-arc segment of the rolling body circuit (14, 16) concerned;
wherein, furthermore, a deflection piece receiver groove (58) for receiving a deflection piece (60) is formed immerged into the contact surface (44), which deflection piece receiver groove crosses the deflection groove (50, 52);
wherein, furthermore, the deflection piece (60) faces the end surface (46) with a breast surface (62) located near the end surface, and additionally has a convex back surface (64) located opposite the outer deflecting surface (54, 56); said back surface (64) forming an inner deflecting surface (64) located opposite the outer deflecting surface (54, 56) for the deflection arc segment;
wherein, furthermore, at least one portion (86) of a lubricant supply system for said at least one rolling body circuit (14, 16) is accommodated in the end plate (13);
wherein, furthermore, a portion (104-114) of the lubricant supply system (86), which is close to the rolling bodies, extends within the deflection piece receiver groove (58) and is open towards the rolling bodies of the rolling body circuit (14, 16) in the area of the inner deflecting surface (64);
characterized in that
the lubricant supply system (86) comprises a lubricant channel (92) extending within the end plate (13) generally in parallel to the contact surface (44), said channel being circumferentially delimited in a channel cross section by the material of the end plate (13) in a single piece manner and is connected, in an area of approximation (118) to the deflection piece receiver groove (58), to the portion (104-114) of the lubricant supply system (86), which is accommodated in the deflection piece receiver groove (58).

2. Linear guiding device according to Claim 1,
characterized in that
the deflection piece receiver groove (58) comprises an end section which, in the longitudinal direction of the deflection piece receiver groove, is distanced from a crossing point with the deflection groove (50, 52), which end section lies within a region of approximation (118) towards the lubricant channel (92);
and in that in the region of this end section of the deflection piece receiver groove (58) there is arranged a connection between the lubricant channel (92) and that part (104-114) of the lubricant supply system (86) being disposed within the deflection piece receiver groove (58).

3. Linear guiding device according to one of the Claims 1 or 2,
characterized in that
the lubricant channel (92) extends generally in parallel to the contact surface (44) and crosses or intersects the deflection piece receiver groove (58) in a bottom region (118) which is adjacent to the back surface (64) of the deflection piece (60); wherein in the region of this crossing or intersection (118), there is provided a connection between the lubricant channel (92) and that part (104-114) of the lubricant supply system (86) being disposed within the deflection piece receiver groove (58).

4. Linear guiding device according to one of the Claims 1-3,
characterized in that,
if viewed parallel to the longitudinal axis (11) of the guide rail (10), the lubricant channel (92) crosses or intersects the deflection piece receiver groove (58) at an angle which is approximately a right angle.

5. Linear guiding device according to one of the Claims 1-4,
characterized in that
that part (104-114) of the lubricant supply system (86) being disposed within the deflection piece receiver groove (58) has a breast surface groove (106) which extends in a longitudinal direction of the deflection piece (60) in the breast surface (62) thereof, and is covered by the end surface (46) of the bearing main body (12).

6. Linear guiding device according to Claim 5,
characterized in that
the breast surface groove (106) is connected to the lubricant channel (92) by means of a primary cross channel (104) on the side of the deflection piece, which cross channel interperses the deflection piece (60) generally orthogonal to the breast surface (62).

7. Linear guiding device according to Claim 6,
characterized in that
the primary cross channel (104) on the side of the deflection piece is conected to a cross channel (102) on the side of the end plate, which extends generally orthogonal to the contact surface (44) of the end plate (13) and is connected to the lubricant channel (92).

8. Linear guiding device according to one of the Claims 5-7,
characterized in that
in the region of the back surface (64) of the deflection piece (60) the breast surface groove (106) is connected to a lubricant discharge system (110-114) by means of a secondary cross channel (108) on the side of the deflection piece.

9. Linear guiding device according to Claim 8,
characterized in that
the deflection piece (60) is associated to the deflection arc segments of two rolling body circuits (14, 16) crossing these two deflection arc segments; and in that the secondary cross channel (108) on the side of the deflection piece interperses the deflection piece (60) at a point between the respective crossing points of the deflection piece (60) and the two deflection-arc segments.

10. Linear guiding device according to Claim 9,
characterized in that
the secondary cross channel (108) on the side of the deflection piece is connected to a muzzle groove (110) being arranged in the convex back surface (64) of the deflection piece (60) and extending in a direction generally in parallel to the longitudinal extension thereof; which muzzle groove is covered by a groove-delimiting surface of the deflection piece receiver groove (58), and extends from the secondary cross channel (108) on the side of the deflection piece to a respective deflection groove (50, 52) of the two deflection arc segments.

11. Linear guiding device according to one of the Claims 1-10,
characterized in that
at least one throttle point or check valve and/or excess pressure valve (114, 116, 119, 120) is provided in the lubricant distribution system (86) within the end plate (13).

12. Linear guiding device according to one of the Claims 1-11,
characterized in that
at at least one discharge point (112, 114) of that part (104-114) of the lubricant supply system (86) being accommodated within the deflection piece receiver groove (58) towards a deflection arc segment, a check valve and/or excess pressure valve (114, 116, 119, 120) is arranged, which valve in any case is open towards the deflection arc segment.

13. Linear guiding device according to Claim 11 or 12,
characterized in that
the check valve and/or excess pressure valve (114, 116, 119-120) is made up by a valve blade (116) which is elastically deflectable and which is produced in an one piece manner with the deflection piece (60).

14. Linear guiding device according to Claim 11,
characterized in that
at the ends of the discharge groove (110) facing a respective deflection groove (50, 52), there is arranged a respective check valve and/or excess pressure valve (114, 116, 119, 120).

15. Linear guiding device according to Claim 14,
characterized in that
the check valve and/or excess pressure valve (114, 116, 119, 120) is designed as a blade type valve made in an one piece manner with the deflection piece (60).

16. Linear guiding device according to Claim 15,
characterized in that
the blade type valve is arranged in a valve chamber (112,114) of the deflection piece (60), which valve chamber partially overlaps with the respective deflection groove (50, 52).

17. Linear guiding device according to Claim 16,
characterized in that
the blade type valve has a blade (116) with a free edge (119) facing the back surface (64) of the deflection piece (60), wherein furthermore the blade (116) is connected at its periphery to the deflection piece (60) generally in an one piece manner.

18. Linear guiding device according to Claim 17,
characterized in that
the free edge (119) of the blade (116) approximately coincides with a delimiting edge (120) of a deflection groove (50, 52).

19. Linear guiding device according to one of the Claims 11-18,
characterized in that
the check valve and/or excess pressure valve (102a, 124a) is arranged in the region of a connection point (118a) between the lubricant channel (92a) and that part of the lubricant supply system being disposed within the deflection piece receiver groove (58a).

20. Linear guiding device according to one of the Claims 1-19,
characterized in that
the bearing main body (12) encompasses the guide rail (10) in a generally U-shaped manner, and for that purpose said bearing main body is designed with a web portion (20) and two leg portions (18, 22); between each of the leg portions (18, 22) and a associated side surface of the guide rail (10) there is respectively provided at least one rolling body circuit (14, 16), preferably two or three rolling body circuits;
and in that, correspondingly, the end plate (13) is also designed in a generally U-shaped manner, with one end plate web portion (74, 76) and two end plate leg portions (48), wherein in each of the end plate leg portions (48) there is provided a corresponding number of deflection grooves (50, 52).

21. Linear guiding device according to Claim 20,
characterized in that,
in the case of two deflection grooves (50, 52) being provided in one end plate leg portion (48), there is associated one common deflection piece receiver groove (58) and one common deflection piece (60) to the same.

22. Linear guiding device according to Claims 20 or 21,
characterized in that
each of the deflection piece receiver groove (58) and the deflection piece (60) extends to the height of the end plate web portion (74, 76) and is connected to the lubricant channel (92) at the height of the end plate web portion (74, 76), said lubricant channel (92) extending within said end plate web portion (74, 76).

23. Linear guiding device according to Claim 22,
characterized in that
the lubricant channel (92) extends through the end plate web portion (74, 76) traversing between two side surfaces (98) of the two end plate leg portions (48).

24. Linear guiding device according to one of the Claims 20-23,
characterized in that
the lubricant channel (92) has a lubricant connection point (88) in a central region (74) of the end plate web portion (74, 76).

25. Linear guiding device according to one of the Claims 23 and 24,
characterized in that
the lubricant channel (92) has a lubricant connection (100) at at least one side surface (98) of an end plate leg portion (48).

26. Linear guiding device according to one of the Claims 1-25,
characterized in that
the lubricant channel (92) has, at at least one part (96) of its length, an oblong, particularly half moon shaped, cross section, wherein the long axis of the oblong cross section generally extends in parallel to the longitudinal axis (11) of the guide rail (10).

27. Linear guiding device according to one of the Claims 1-26,
characterized in that
the end plate (13) is capable of being assembled in building block fashion from a plurality of partial end plates (48-76, 74) adjoining to each other in flow direction of the lubricant in the lubricant channel; wherein in the individual partial end plates (48-76, 74) there are arranged parts (96, 94) of the lubricant supply system (86) which form a generally tight connection in the assembly of the partial end plates (48-76, 74) to the end plate (13).

28. Linear guiding device according to Claim 27,
characterized in that,
in order to connect the parts (96, 94) of the lubricant supply system (86), there are formed or cast plug-in type connection elements (at 97) in an one piece manner at the partial end plates (48-76, 74) by injection moulding or casting, which plug-in type connection elements inevitably form a generally tight plug-in type connection in the assembly of the partial end plates (48-76, 74).

29. Linear guiding device according to Claim 28,
characterized in that
the plug-in type connection elements (at 97) are formed by complementary, preferably conical, projections and recesses in the abutting surfaces of the partial end plates (48-76, 74).

30. Linear guiding device according to one of the Claims 27-29,
characterized in that
the partial end plates (48-76, 74) comprise two leg end plates (48-76, 74), each with an end plate web section (76) located close to the leg, and a central end plate web section (74).

31. Linear guiding device according to one of the Claims 1-30,
characterized in that,
at least one guide web (24) for the guidance of rolling bodies is attachable to the end plate (13) in the region of the bearing main body (12) or is attached thereto in an one piece manner.

32. Linear guiding device according to one of the Claims 1-31,
characterized in that
at least one positioning ring (78, 80) is formed on the deflection piece (60), which positioning ring is designed to be received in an enlargement at the end of a rolling-body return bore of the bearing main body (12), and/or in a recess (82, 84) of the end plate (13), which is adjacent to the deflection groove.

33. Linear guiding device according to one of the Claims 1-32,
characterized in that
the end plate (13) and/or the deflection piece (60) are injection molded or cast of plastics.

34. Linear guiding device according to one of the Claims 1-33,
characterized in that
an excess pressure valve and/or check valve arrangement is provided in a lubricant supply system (86), in particular in a lubricant supply system which leads to several lubricant consumption points (50, 52) being supplied in parallel; wherein a valve blade (116) protruding into a lubricant conveying path (92, 102-114) and being generally orthogonal to a flow through direction, which valve blade is fixed to a delimiting surface of the lubricant conveying path with a part of its periphery and faces this delimiting surface of the lubricant conveying path with a remaining periphery (119); and which is deflectable in parallel to the longitudinal extension of the lubricant conveying path in at least one direction.

35. Linear guiding device according to Claim 34,
characterized in that
the valve blade (116), in a first deflection direction, has a lower resistance against deflection; and in a second deflection direction, has a greater resistance against deflection.

36. Linear guiding device according to Claims 34 or 35,
characterized in that
the valve blade (116) is disposed with its remaining periphery (119) in the region of an enlargement of the cross section of the lubricant conveying path.

## Revendications

1. Dispositif de guidage linéaire, comprenant un rail de guidage (10) avec un axe longitudinal (11) et un corps principal d'appui (12), guidé sur ce rail de guidage (10), le long de cet axe (11), par des chemins de circulation de corps de roulement (14, 16),
dans lequel une plaque terminale (13), avec une surface d'application (44) tournée vers la face terminale (46) du corps principal d'appui (12), s'applique contre le corps principal d'appui (12), contre au moins une face terminale (46) du corps principal d'appui (12),
dans lequel en outre il est encastré, dans la surface d'application (44) de la plaque terminale (13), pour au moins un chemin de circulation de corps de roulement (14, 16) une gorge de renvoi (50, 52) qui forme une surface de renvoi extérieure (54,56), pour une portion d'arc de renvoi du chemin de circulation de corps de roulement (14, 16) concerné,
dans lequel en outre est formée, encastrée dans la surface d'application (44), une rigole de logement de pièce de renvoi (58), croisant la rigole de renvoi (50, 52), destinée à recevoir une pièce de renvoi (60) croisant la rigole de renvoi (50, 52),
dans lequel en outre la pièce de renvoi (60) est tournée vers la face terminale (46), par une face avant (62) proche de la face terminale et présente en outre une face arrière (64) convexe opposée à la surface de renvoi extérieure (54,56), laquelle face arrière (64) forme une surface de renvoi intérieure (64), opposée à la face de renvoi extérieure (54, 56), destinée à la portion d'arc de renvoi,
dans lequel en outre une partie (86) au moins d'un système d'alimentation en lubrifiant, destinée à au moins un chemin de circulation de corps de roulement (14, 16), est logé dans la plaque terminale (13),
dans lequel en outre une partie (104 à 114) proche des corps de roulement du système d'alimentation en lubrifiant (86) s'étend à l'intérieur de la rigole de logement de pièce de renvoi (58) et est ouverte, dans la région de la surface de renvoi intérieure (64), vers les corps de roulement du chemin de circulation de corps de roulement (14, 16),
caractérisé
en ce que le système d'alimentation en lubrifiant (86) comprend un canal de lubrifiant (92) s'étendant à l'intérieur de la plaque terminale (13), sensiblement parallèlement à la surface d'application (44), lequel canal est délimité d'un seul tenant tout autour, dans une section de canal, par le matériau de la plaque terminale (13) et est relié, dans une zone d'approche (118) de la rigole de logement de pièce de renvoi (58), avec la partie (104 à 114) du système d'alimentation en lubrifiant (86), logée dans la rigole de logement de pièce de renvoi (58).

2. Dispositif de guidage linéaire selon la revendication 1,
caractérisé
en ce que la rigole de logement de pièce de renvoi (58) présente une portion terminale espacée dans sa direction longitudinale d'un point de croisement avec la rigole de renvoi (50, 52), laquelle portion terminale se situe dans une zone d'approche (118) du canal de lubrifiant (92), et en ce qu'une liaison entre le canal de lubrifiant (92) et la partie (104 à 114) du système d'alimentation en lubrifiant (86), située à l'intérieur de la rigole de logement de pièce de renvoi (58), est disposée dans la région de cette portion terminale de la rigole de logement de pièce de renvoi (58).

3. Dispositif de guidage linéaire selon l'une des revendications 1 et 2, caractérisé
en ce que le canal de lubrifiant (92) est sensiblement parallèle à la surface d'application (44) et croise ou coupe la rigole de logement de pièce de renvoi (58), dans une zone de fond (118), adjacente à la face arrière (64) de la pièce de renvoi (60), une liaison entre le canal de lubrifiant (92) et la partie (104 à 114) du système d'alimentation en lubrifiant (86), située à l'intérieur de la rigole de logement de pièce de renvoi (58), étant réalisée dans la zone de ce croisement ou intersection (118).

4. Dispositif de guidage linéaire selon l'une des revendications 1 à 3,
caractérisé
en ce que dans le cas d'un sens d'observation parallèle à l'axe longitudinal (11) du rail de guidage (10), le canal de lubrifiant (92) croise ou coupe la rigole de logement de pièce de renvoi (58), sous un angle approximativement droit.

5. Dispositif de guidage linéaire selon l'une des revendications 1 à 4,
caractérisé
en ce que la partie (104 à 114) du système d'alimentation en lubrifiant (86), située à l'intérieur de la rigole de logement de pièce de renvoi (58), présente une rainure de face avant (106), qui s'étend dans la direction longitudinale de la pièce de renvoi (60), dans sa face avant (62) et qui est recouverte par la face terminale (46) du corps principal d'appui (12).

6. Dispositif de guidage linéaire selon la revendication 5,
caractérisé
en ce que la rainure de face avant (106) est reliée au canal de lubrifiant (92) par un canal transversal (104) primaire, côté pièce de renvoi, lequel traverse la pièce de renvoi (60) sensiblement perpendiculairement à la face avant (62).

7. Dispositif de guidage linéaire selon la revendication 6,
caractérisé
en ce que le canal transversal (104) primaire côté pièce de renvoi se raccorde à un canal transversal (102) côté plaque terminale, qui s'étend sensiblement perpendiculairement à la surface d'application (44) de la plaque terminale (13) et qui est en liaison avec le canal de lubrifiant (92).

8. Dispositif de guidage linéaire selon l'une des revendications 5 à 7,
caractérisé
en ce que la rainure de face avant (106) est reliée, par un canal transversal (108) secondaire, côté pièce de renvoi, à un système de sortie de lubrifiant (110 à 114), dans la région de la face arrière (64) de la pièce de renvoi (60).

9. Dispositif de guidage linéaire selon la revendication 8,
caractérisé
en ce que la pièce de renvoi (60) est associée aux portions d'arc de renvoi de deux chemins de circulation de corps de roulement (14, 16), en croisant ces deux portions d'arc de renvoi, et en ce que le canal transversal secondaire (108), côté pièce de renvoi, traverse la pièce de renvoi (60) en un point situé entre des points de croisement respectifs de la pièce de renvoi (60) avec les deux portions d'arc de renvoi.

10. Dispositif de guidage linéaire selon la revendication 9,
caractérisé
en ce que le canal transversal secondaire (108) côté pièce de renvoi est relié à une rigole de débouché (110), disposée dans la face arrière (64) convexe de la pièce de renvoi (60), s'étendant sensiblement parallèlement à son extension longitudinale, laquelle est recouverte par une surface de délimitation de rigole de la rigole de logement de pièce de renvoi (58) et s'étend depuis le canal transversal (108) secondaire, côté pièce de renvoi, vers une rigole de renvoi (50, 52) des deux portions d'arc de renvoi.

11. Dispositif de guidage linéaire selon l'une des revendications 1 à 10,
caractérisé
en ce qu'au moins un point d'étranglement ou un clapet anti-retour ou/et une soupape de surpression (114, 116, 119, 120) est prévu dans le système de distribution de lubrifiant (86), à l'intérieur de la plaque terminale (13).

12. Dispositif de guidage linéaire selon l'une des revendications 1 à 11,
caractérisé
en ce qu'en au moins un point de débouché (112, 114) de la partie (104 à 114) du système d'alimentation en lubrifiant (86), située à l'intérieur de la rigole de logement de pièce de renvoi (58), vers une portion d'arc de renvoi, il est prévu un clapet anti-retour ou/et une soupape de surpression (114, 116, 119, 120) qui dans tous les cas est ouvert vers la portion d'arc de renvoi.

13. Dispositif de guidage linéaire selon la revendication 11 ou 12,
caractérisé
en ce que le clapet anti-retour ou/et la soupape de surpression (114, 116, 119, 120) est formé par une lamelle de soupape (116), réalisée d'un seul tenant avec la pièce de renvoi (60) déviable élastiquement.

14. Dispositif de guidage linéaire selon la revendication 11,
caractérisé
en ce qu'à chacune des extrémités de la rigole de débouché (110), tournées vers une rigole de renvoi (50, 52), est monté un clapet anti-retour ou/et une soupape de suppression (114, 116, 119, 120).

15. Dispositif de guidage linéaire selon la revendication 14,
caractérisé
en ce que le clapet anti-retour ou/et la soupape de surpression (114, 116, 119, 120) est réalisé en tant que soupape à lamelle d'un seul tenant avec la pièce de renvoi (60).

16. Dispositif de guidage linéaire selon la revendication 15,
caractérisé
en ce que la soupape à lamelle est montée dans une chambre de soupape (112, 114) de la pièce de renvoi (60), recouvrant partiellement la rigole de renvoi (50, 52) respective.

17. Dispositif de guidage linéaire selon la revendication 16,
caractérisé
en ce que la soupape à lamelle présente une lamelle (116) avec un bord libre (119), tourné vers la face arrière (64) de la pièce de renvoi (60), la lamelle (116) étant par ailleurs sensiblement d'un seul tenant avec la pièce de renvoi (60), sur son pourtour (18).

18. Dispositif de guidage linéaire selon la revendication 17,
caractérisé
en ce que le bord libre (119) de la lamelle (116) coïncide approximativement avec un bord de délimitation (120) d'une rigole de renvoi (50, 52).

19. Dispositif de guidage linéaire selon l'une des revendications 11 à 18,
caractérisé
en ce que le clapet anti-retour ou/et la soupape de surpression (102a, 124a) est monté dans la zone d'un point de liaison (118a), entre le canal de lubrifiant (92a) et la partie du système d'alimentation en lubrifiant, située à l'intérieur de la rigole de logement de pièce de renvoi (58a).

20. Dispositif de guidage linéaire selon l'une des revendications 1 à 19,
caractérisé
en ce que le corps principal d'appui (12) entoure le rail de guidage (10) sensiblement en U et présente à cet effet une partie formant dos (20) et deux parties formant branches (18, 22), au moins un chemin de circulation de corps de roulement (14, 16), de préférence deux ou trois chemins de circulation de corps de roulement étant prévus entre chacune des parties formant branches (18, 22) et une face latérale correspondante du rail de guidage (10), et en ce qu'en conséquence la plaque terminale (13) est aussi conformée sensiblement en U avec une partie formant dos de plaque terminale (74, 76) et deux parties formant branches de plaque terminale (48), un nombre correspondant de rigoles de renvoi (50, 52) étant prévu dans chacune des parties formant branches de plaque terminale (48).

21. Dispositif de guidage linéaire selon la revendication 20,
caractérisé
en ce qu'en présence de deux rigoles de renvoi (50, 52) dans une partie formant branche de plaque terminale (48), à celles-ci sont associées une rigole de logement de pièce de renvoi (58) commune et une pièce de renvoi (60) commune.

22. Dispositif de guidage linéaire selon la revendication 20 ou 21,
caractérisé
en ce que la rigole de logement de pièce de renvoi (58) et la pièce de renvoi (60) s'étendent chacune jusqu'à hauteur de la partie formant dos de plaque terminale (74, 76) et sont reliées, à hauteur de la partie formant dos de plaque terminale (74, 76), avec le canal de lubrifiant (92), ce canal de lubrifiant (92) s'étendant à l'intérieur de la partie formant dos de plaque terminale (74, 76).

23. Dispositif de guidage linéaire selon la revendication 22,
caractérisé
en ce que le canal de lubrifiant (92) s'étend en continu à travers la partie formant dos de plaque terminale (74, 76), entre deux faces latérales (98) des deux parties formant branches de plaque terminale (48).

24. Dispositif de guidage linéaire selon l'une des revendications 20 à 23,
caractérisé
en ce que le canal de lubrifiant (92) présente un point de raccord de lubrifiant (88), dans une zone centrale (74) de la partie formant dos de plaque terminale (74, 76).

25. Dispositif de guidage linéaire selon l'une des revendications 23 et 24, caractérisé
en ce que le canal de lubrifiant (92) présente un raccord de lubrifiant (100) sur au moins une face latérale (98) d'une partie formant branche de plaque terminale (48).

26. Dispositif de guidage linéaire selon l'une des revendications 1 à 25,
caractérisé
en ce que le canal de lubrifiant (92) présente, au moins sur une partie (96) de sa longueur, une section oblongue, en particulier en forme de demi-lune, le grand axe de la section oblongue étant sensiblement parallèle à l'axe longitudinal (11) du rail de guidage (10).

27. Dispositif de guidage linéaire selon l'une des revendications 1 à 26,
caractérisé
en ce que la plaque terminale (13) peut être composée, de manière modulaire, d'une pluralité de plaques terminales partielles (48 à 76, 74), disposées côté à côte dans le canal de lubrifiant (92), dans le sens d'écoulement du lubrifiant, des parties (96, 94) du système d'alimentation en lubrifiant (86) étant disposées dans les diverses plaques terminales partielles (48 à 76, 74), qui viennent en liaison sensiblement étanche, lorsque les plaques terminales partielles (48 à 76, 74) sont assemblées pour composer la plaque terminale (13).

28. Dispositif de guidage linéaire selon la revendication 27,
caractérisé
en ce que pour la liaison des parties (96, 94) du système d'alimentation en lubrifiant (86), des éléments de liaison à enfichage (en 97) sont formés par injection ou moulés d'un seul tenant, sur les plaques terminales partielles (48 à 76, 74), lesquels éléments viennent forcément en liaison par enfichage sensiblement étanche, lors de l'assemblage des plaques terminales partielles (48 à 76, 74).

29. Dispositif de guidage linéaire selon la revendication 28,
caractérisé
en ce que les éléments de liaison à enfichage (en 97) sont formés par des saillies et des renfoncements complémentaires, de préférence coniques, pratiqués dans des surfaces de joint des plaques terminales partielles (48 à 76, 74).

30. Dispositif de guidage linéaire selon l'une des revendications 27 à 29,
caractérisé
en ce que les plaques terminales partielles (48 à 76, 74) comprennent deux plaques terminales formant branches (48 à 76) avec chacune une portion de dos de plaque terminale (76) proche des branches et une portion de dos de plaque terminale (74) centrale.

31. Dispositif de guidage linéaire selon l'une des revendications 1 à 30,
caractérisé
en ce qu'au moins une nervure de guidage (24) peut être fixée ou est fixée d'un seul tenant sur la plaque terminale (13), pour guider des corps de roulement dans la zone du corps principal d'appui (12).

32. Dispositif de guidage linéaire selon l'une des revendications 1 à 31,
caractérisé
en ce que sur la pièce de renvoi (60) est formé au moins un anneau de positionnement (78, 80), qui est conformé de manière à être logé dans un élargissement terminal d'un perçage de retour de corps de roulement du corps principal d'appui (12) ou/et dans un évidement (82, 84) de la plaque terminale (13), adjacent à une rigole de renvoi.

33. Dispositif de guidage linéaire selon l'une des revendications 1 à 32,
caractérisé
en ce que la plaque terminale (13) ou/et la pièce de renvoi (60) sont en matière synthétique injectée ou coulée.

34. Dispositif de guidage linéaire selon l'une des revendications 1 à 33,
caractérisé
en ce qu'un dispositif à soupape de surpression et/ou à clapet anti-retour est prévu dans un système d'alimentation en lubrifiant (86), en particulier dans un système d'alimentation en lubrifiant qui mène à plusieurs points de récepteurs de lubrifiant (50, 52), alimentés en parallèle, une lamelle de soupape (116), pénétrant dans un parcours de conduite de lubrifiant (92, 102 à 114), sensiblement perpendiculaire à une direction d'écoulement, étant fixée par une partie de son pourtour, sur une surface de délimitation du parcours de conduite de lubrifiant et qui, par un pourtour résiduel (119), fait face à cette surface de délimitation du parcours de conduite de lubrifiant et est déviable dans au moins une direction, parallèlement à l'extension longitudinale du parcours de conduite de lubrifiant.

35. Dispositif de guidage linéaire selon la revendication 34,
caractérisé
en ce que la lamelle de soupape (116) possède une résistance à la déviation plus faible dans une première direction de déviation et une plus grande résistance à la déviation, dans une deuxième direction de déviation.

36. Dispositif de guidage linéaire selon la revendication 34 ou 35,
caractérisé
en ce que la lamelle de soupape (116) se situe, avec son pourtour résiduel (119), dans la zone d'un élargissement de la section du parcours de la conduite de lubrifiant.
